# EUROPEAN PATENT SPECIFICATION

(11) **EP 3 265 517 B1**
(45) Date of publication and mention of the grant of the patent: **08.05.2019**
(21) Application number: 16713171.3
(22) Date of filing: 03.03.2016
(51) Int. Cl.: C09D 5/00

(54) **PARTIALLY REACTED SILANE PRIMER COMPOSITIONS**
TEILWEISE REAGIERTE SILANPRIMERZUSAMMENSETZUNGEN
COMPOSITIONS D'APPRÊT À BASE DE SILANE AYANT PARTIELLEMENT RÉAGI

(30) Priority: 06.03.2015 US 201514640044
(43) Date of publication of application: 10.01.2018
(60) Divisional application: 19154237.2
(73) Proprietor: PRC-Desoto International, Inc., Sylmar, California 91342 (US)
(72) Inventor: PATHAK, Srikant, Diamond Bar, California 91765 (US); ZHENG, Chu Ran, Sherman Oaks, California 91423 (US); VIRNELSON, Bruce, Valencia, California 91355 (US)
(74) Representative: f & e patent
(86) International application number: PCT/US2016/020602
(87) International publication number: WO 2016/144677

(56) References cited:
- US-A- 4 389 432
- US-A1- 2008 268 261
- US-A1- 2014 069 293
- US-A1- 2014 275 461

## Description

### FIELD

The present disclosure relates to partially reacted silane primer compositions, the use of partially reacted silane primer compositions as adhesion-promoting coatings, and methods of using partially reacted silane primer compositions and coatings.

### BACKGROUND

Surface adhesion of aerospace sealants remains a challenge. An aerospace sealant must meet the demanding performance requirements including adhesion following exposure to a wide range of solvents including aviation fuel, oil, salt and water under severe thermal and environmental conditions. It is also desirable that an aerospace sealant meet these performance requirements when applied to a wide range of surfaces including aerospace grade metals, composites, and coatings.

Adhesion of aerospace sealant compositions can be improved my adding adhesion promoters to the composition as unreactive or reactive components or by pretreating a surface with a composition containing adhesion promoters. Although these approaches can improve the dry adhesion of a sealant to certain surfaces, the methods are not generally applicable for use with all surfaces and often fail to provide desired adhesion following solvent immersion, particularly immersion in aviation fuel.

Compositions and methods for improving surface adhesion of aerospace sealants to a wide variety of surfaces and that meet the performance requirements of the aerospace industry are desired.

### SUMMARY

Compositions containing partially reacted silanes can be used as primer coatings to improve the surface adhesion of aerospace sealants.

According to the present invention, compositions are provided, comprising partially reacted organo-functional alkoxysilanes comprising the reaction products of reactants comprising (i) an amino-functional alkoxysilane; (ii) an organo-functional alkoxysilane, wherein the organo group is reactive with a thiol group; and (iii) water; and an alcohol.

According to the present invention, methods of preparing a reacted organo-functional alkoxysilane composition are provided, comprising combining an amino-functional alkoxysilane; an organo-functional alkoxysilane wherein the organo group is reactive with a thiol group; an alcohol; and water, wherein the molar ratio of water to alkoxy groups is from 0.9 to 1.1; and heating the mixture to a temperature from 60°C to 85°C from 40 minutes to 80 minutes to provide a composition comprising a partially reacted organo-functional alkoxysilane.

According to the present invention, methods of preparing a partially reacted epoxy-functional alkoxysilane composition are provided, comprising reacting an amino-functional alkoxysilane; an epoxy-functional alkoxysilane; an alcohol; and water.

According to the present invention, multilayer coatings are provided, comprising a first coating comprising the composition of claim 1; and a second coating overlying the first coating, wherein the second coating is prepared from a composition comprising reactive thiol groups and reactive alkenyl groups.

According to the present invention, methods of sealing a surface are provided comprising providing a surface; applying the composition of claim 1 to the surface; drying the composition to provide a dried primer coating; applying an uncured sealant composition onto the dried primer coating, wherein the uncured sealant composition comprises reactive thiol groups and reactive alkenyl groups; and curing the uncured sealant composition to provide a sealed surface.

### BRIEF DESCRIPTION OF THE DRAWINGS

FIG. 1 shows Fourier transform infrared (FTIR) spectra of unreacted alkoxy silanes and partially reacted alkoxy silanes provided by the present disclosure.

FIG. 2 shows a bonding model for a partially reacted alkoxysilane composition including amino-functional alkoxysilanes and organo-functional alkoxysilanes.

FIG. 3 shows a bonding model for a partially reacted alkoxysilane composition including amino-functional alkoxysilanes, diamine alkoxysilanes, and organo-functional alkoxysilanes.

FIG. 4A and FIG. 4B show the peel strength and %cohesion of cured sealants applied to various substrate surface having a partially reacted silane primer composition provided by the present disclosure.

FIG. 5A and FIG. 5B show the peel strength and %cohesion of cured sealants applied to various substrate surface having a partially reacted silane primer composition provided by the present disclosure following exposure to 50/50 JRF Type 1 / 3% NaCl for seven (7) days at 140°F.

FIG. 6 shows the peel strength and %cohesion of cured sealants applied to various substrate surface having a partially reacted silane primer composition provided by the present disclosure following exposure to JRF Type 1 for seven (7) days at 140°F.

FIG. 7 shows the peel strength and %cohesion of cured sealants applied to various substrate surface having a partially reacted silane primer composition provided by the present disclosure following exposure to 3% NaCl for seven (7) days at 140°F.

Reference is now made to certain embodiments of compositions and methods. The disclosed embodiments are not intended to be limiting of the claims. To the contrary, the claims are intended to cover all alternatives, modifications, and equivalents.

### DETAILED DESCRIPTION

For purposes of the following detailed description, it is to be understood that embodiments provided by the present disclosure may assume various alternative variations and step sequences, except where expressly specified to the contrary. Moreover, other than in any operating examples, or where otherwise indicated, all numbers expressing, for example, quantities of ingredients used in the specification and claims are to be understood as being modified in all instances by the term "about." Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

A dash ("-") that is not between two letters or symbols is used to indicate a point of bonding for a substituent or between two atoms. For example, -CONH₂ is attached through the carbon atom.

"Alkanediyl" refers to a diradical of a saturated, branched or straight-chain, acyclic hydrocarbon group, having, for example, from 1 to 18 carbon atoms (C₁₋₁₈), from 1 to 14 carbon atoms (C₁₋₁₄), from 1 to 6 carbon atoms (C₁₋₆), from 1 to 4 carbon atoms (C₁₋₄), or from 1 to 3 hydrocarbon atoms (C₁₋₃). It will be appreciated that a branched alkanediyl has a minimum of three carbon atoms. An alkanediyl can be C₂₋₁₄ alkanediyl, C₂₋₁₀ alkanediyl, C₂₋₈ alkanediyl, C₂₋₆ alkanediyl, C₂₋₄ alkanediyl, or C₂₋₃ alkanediyl. Examples of alkanediyl groups include methane-diyl (-CH₂-), ethane-1,2-diyl (-CH₂CH₂-), propane-1,3-diyl and iso-propane-1,2-diyl (e.g., -CH₂CH₂CH₂- and -CH(CH₃)CH₂-), butane-1,4-diyl (-CH₂CH₂CH₂CH₂-), pentane-1,5-diyl (-CH₂CH₂CH₂CH₂CH₂-), hexane-1,6-diyl (-CH₂CH₂CH₂CH₂CH₂CH₂-), heptane-1,7-diyl, octane-1,8-diyl, nonane-1,9-diyl, decane-1,10-diyl, dodecane-1,12-diyl, and the like.

"Alkanecycloalkane" refers to a saturated hydrocarbon group having one or more cycloalkyl and/or cycloalkanediyl groups and one or more alkyl and/or alkanediyl groups, where cycloalkyl, cycloalkanediyl, alkyl, and alkanediyl are defined herein. Each cycloalkyl and/or cycloalkanediyl group(s) can be C₃₋₆, C₅₋₆, cyclohexyl or cyclohexanediyl. Each alkyl and/or alkanediyl group(s) can be C₁₋₆, C₁₋₄, C₁₋₃, or methyl, methanediyl, ethyl, or ethane-1,2-diyl. A alkanecycloalkane group can be C₄₋₁₈ alkanecycloalkane, C₄₋₁₆ alkanecycloalkane, C₄₋₁₂ alkanecycloalkane, C₄₋₈ alkanecycloalkane, C₆₋₁₂ alkanecycloalkane, C₆₋₁₀ alkanecycloalkane, or C₆₋₉ alkanecycloalkane. Examples of alkanecycloalkane groups include 1,1,3,3-tetramethylcyclohexane and cyclohexylmethane.

"Alkanecycloalkanediyl" refers to a diradical of an alkanecycloalkane group. A alkanecycloalkanediyl group can beC₄₋₁₈ alkanecycloalkanediyl, C₄₋₁₆ alkanecycloalkanediyl, C₄₋₁₂ alkanecycloalkanediyl, C₄₋₈ alkanecycloalkanediyl, C₆₋₁₂ alkanecycloalkanediyl, C₆₋₁₀ alkanecycloalkanediyl, or C₆₋₉ alkanecycloalkanediyl. Examples of alkanecycloalkanediyl groups include 1,1,3,3-tetramethylcyclohexane-1,5-diyl and cyclohexylmethane-4,4'-diyl.

"Alkenyl" refers to -CH=CH₂ group. An alkenyl-terminated compound refers to a compound having one or more alkenyl groups. An alkenyl-terminated compound can comprise a compound of the formula:

CH₂=CH-R-CH=CH₂

wherein:
R is selected from C₂₋₆ alkanediyl, C₆₋₈ cycloalkanediyl, C₆₋₁₀ alkanecycloalkanediyl, C₅₋₈ heterocycloalkanediyl, and -[-(CHR³)ₚ-X-]_{q}-(CHR³)ᵣ-;
wherein:
   each R⁴ is independently selected from hydrogen and methyl;
   each X is independently selected from -O-, -S-, and -NR- wherein
R is selected from hydrogen and methyl;
   p is an integer from 2 to 6;
   q is an integer from 1 to 5; and
   r is an integer from 2 to 10.
An alkenyl-terminated compound may have two, three, or four terminal alkenyl groups. An alkenyl-terminated compound may comprise a mixture of alkenyl-terminated compounds. An alkenyl-terminated compound can comprise polyvinyl ether, a polyallyl compound, or a combination thereof. An alkenyl-terminated compound can comprise polyvinyl ether, or a divinyl ether. An alkenyl-terminated compound can comprise a polyallyl compound, ora triallyl compound, or triallyl cyanurate, triallyl isocyanurate, or a combination thereof. An alkenyl-terminated compound can include a divinyl ether and an alkenyl-terminated trifunctionalizing agent.

"Alkoxy" refers to a group -OR where R is an organic moiety such as C₁₋₄ alkyl or methyl, ethyl, propyl, n-butyl, or iso-butyl.

"Alkyl" refers to a monoradical of a saturated, branched or straight-chain, acyclic hydrocarbon group having, for example, from 1 to 20 carbon atoms, from 1 to 10 carbon atoms, from 1 to 6 carbon atoms, from 1 to 4 carbon atoms, or from 1 to 3 carbon atoms. It will be appreciated that a branched alkyl has a minimum of three carbon atoms. An alkyl group can be C₁₋₆ alkyl, C₁₋₄ alkyl, or C₁₋₃ alkyl. Examples of alkyl groups include methyl, ethyl, n-propyl, iso-propyl, n-butyl, iso-butyl, tert-butyl, n-hexyl, n-decyl, tetradecyl, and the like. An alkyl group is C₁₋₆ alkyl, C₁₋₄ alkyl, or C₁₋₃ alkyl. It will be appreciated that a branched alkyl has at least three carbon atoms.

"Amino-functional alkoxysilane" refers to an alkoxysilane having a primary amine group of a secondary amine group. Examples of amino-functional alkoxysilanes are represented by compound of Formula (2) and Formula (3).

"Cycloalkanediyl" refers to a diradical saturated monocyclic or polycyclic hydrocarbon group. A cycloalkanediyl group is C₃₋₁₂ cycloalkanediyl, C₃₋₈ cycloalkanediyl, C₃₋₆ cycloalkanediyl, or C₅₋₆ cycloalkanediyl. Examples of cycloalkanediyl groups include cyclohexane-1,4-diyl, cyclohexane-1,3-diyl, and cyclohexane-1,2-diyl.

As used herein, "polymer" refers to oligomers, homopolymers, and copolymers, which may be cured or uncured. Unless stated otherwise, molecular weights are number average molecular weights for polymeric materials indicated as "Mₙ" as determined, for example, by gel permeation chromatography using a polystyrene standard in an art-recognized manner. Unless stated otherwise, molecular weights are number average molecular weights for polymeric materials indicated as "Mn" as may be determined, for example, by gel permeation chromatography using a polystyrene standard in an art-recognized manner.

"Prepolymers" refer to polymers prior to curing. In general, prepolymers provided by the present disclosure are liquid at room temperature. "Adducts" refer to prepolymers that are functionalized with a reactive terminal group; however, prepolymers may also contain terminal functional groups. Thus, the terms prepolymer and adduct are used interchangeably. The term adduct is often used to refer to a prepolymer that is an intermediate in a reaction sequence used to prepare a prepolymer.

"Curing agent" refers to a compound that has reactive groups that are reactive with the reactive groups of a prepolymer with which it is used to form a cured crosslinked polymer. A curing agent may include monomers, chain-extenders, and crosslinkers. In general, a curing agent is characterized by a low molecular weight, which is less than the molecular weight of the prepolymer with which it is used. A curing agent and the prepolymer are used in a one-to-one equivalent ratio.

The term "silane" is used her to stand for silanes, silanols, siloxanes, polysiloxanes and their reaction products and/or derivatives which are often "silane" mixtures. The term "condense" in the sense of this patent application refers to all forms of crosslinking, further crosslinking and further chemical reactions of the silanes/silanols./siloxanes/polysiloxanes. Addition in the form of a silane is usually assumed here, where the at least one silane added is often at least partially hydrolyzed, usually forming at least one silanol on initial contact with water or humidity, at least one siloxane being formed from the silanol and later optionally also at least one polysiloxane (possibly) being formed.

The term "coating" herein includes partial, or incomplete, curing and substantially complete curing. Condensation resulting in curing will take place under ambient temperature conditions and can be accelerated by the application of heat and/or vacuum.

"Partially reacted silane" or "partially reacted alkoxysilane" refers to the reaction product of one or more alkoxysilanes and water. A partially reacted alkoxysilane can include partially hydrolyzed alkoxysilanes, fully hydrolyzed alkoxysilanes, partially condensed alkoxysilanes, fully condensed alkoxysilanes, unreacted alkoxysilanes, transesterified alkoxysilanes, and combinations of any of the foregoing. A partially reacted alkoxysilane is stable in a dilute alcohol solution. A partially reacted alkoxysilane is distinguished from a gel.

An organo-functional mono(alkoxysilane) refers to an alkoxysilane having one alkoxysilane group, an organo-functional bis(alkoxysilane) refers to an alkoxysilane having two alkoxysilane groups, and an organo-functional tris(alkoxysilane) refers to an alkoxysilane having three alkoxysilane groups. An organo-functional group can be an alkenyl, an acrylate, a methacrylate, or an epoxy group. An organo-functional group can be reactive with a thiol group, or reactive with an alkenyl group. In general, an organo-functional alkoxysilane does not include primary or secondary amine functional groups. Such alkoxysilanes are included within the scope of amino-functional alkoxysilanes.

An alkoxysilane refers to silanes have one alkoxy group, two alkoxy groups, and three alkoxy groups. Similarly, an alkoxysilane refers to a compound having at least one alkoxysilane group in which the alkoxysilane group may have one, two, or three alkoxy groups.

Reference is now made in detail to certain embodiments of compounds, compositions, and methods. The disclosed embodiments are not intended to be limiting of the claims. To the contrary, the claims are intended to cover all alternatives, modifications, and equivalents.

Compositions provided by the present disclosure include partially reacted organo-functional alkoxysilanes.

Compositions can include a partially reacted organo-functional alkoxysilane or a mixture of partially reacted organo-functional alkoxysilanes.

Although the exact chemical structure of a partially reacted silane composition is not known, at least in part based on the performance attributes, it is believed that the partially reacted silanes comprise a mixture of alkoxysilane monomers, partially or fully hydrolyzed alkoxysilane monomers, and lower molecular weight condensation of the foregoing. The condensation products are sufficiently low in molecular weight that the species remain suspended in an alcohol solvent indefinitely and when applied to a surface form a thin, homogeneous film less than 250 nm thick. When applied to a surface, the composition of partially reacted silanes may further react during drying and/or following drying. Further reaction of the partially reacted alkoxy silane may form an in-plane network that enhances the adhesion strength of the thin coating. It is believed that the unreacted hydroxyl groups and siloxane groups reacted with surface oxygen atoms and metals to provide adhesive strength. Unreacted organo-functional groups remain available for reaction with reactive functional groups of an overlying coating or sealant.

Adhesion promoters that are added to coating or sealant compositions to enhance adhesion strength must migrate to a surface and react with surface groups. Migration and reaction of the adhesion promoters builds up over time and therefore requires longer curing times. In contrast, primer coatings provided by the present disclosure can react directly with a surface following application to provide good adhesion strength. When using alcoholic solvents, drying and establishing adhesion strength can occur within less than one hour, at which time and overlying coating or sealant can be applied.

The chemical structure of the partially reacted silanes in solution can be difficult to determine using analytical techniques, at least in part because the solids content is low, but also because concentrating or changing the environment can alter the equilibrium between the non-hydrolyzed and/or non-condensed alkoxy silanes, the hydrolyzed and/or condensed alkoxysilanes, the partially hydrolyzed and/or partially condensed alkoxysilanes and water in the alcoholic solution. Although a thin, dry film prepared from the partially reacted alkoxysilane composition can be characterized spectroscopically, at least because further hydrolysis and/or condensation may occur following application, the characteristics of a dried film may not be representative of the partially reacted alkoxysilanes in solution.

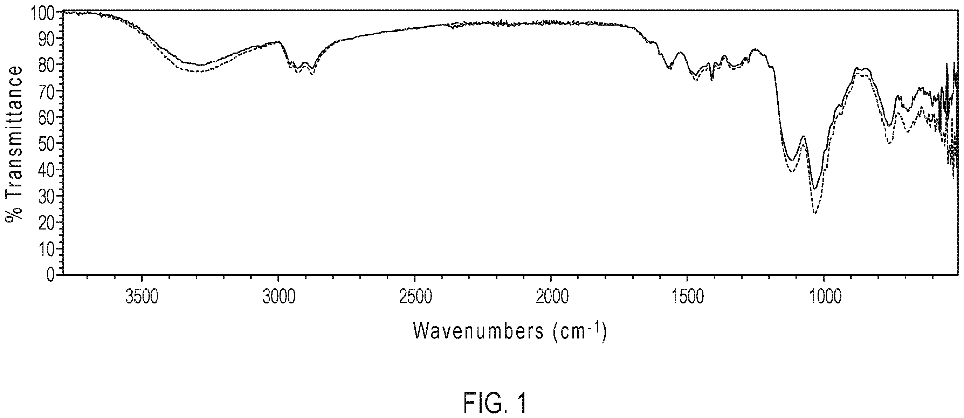

FIG. 1 shows Fourier transform infrared (FTIR) spectra of a dried thin film formed from a solution of the unreacted components (solid line) and for a dried thin film formed from a partially reacted alkoxysilane composition (dashed lines). The infrared bands in the range of 1120 cm⁻¹ and 1020 cm⁻¹ are attributed to -Si-O-Si- bonds, which are shown to increase in strength in the partially reacted alkoxysilane indicating that the alkoxysilanes are at least partially condensed.

A composition may contain from 5 wt% to 30 wt% of partially reacted organo-functional alkoxysilanes, from 10 wt% to 25 wt% of partially reacted organo-functional alkoxysilanes, or from 10 wt% to 20 wt% of partially reacted organo-functional alkoxysilanes. Wt% is based on the total weight of the composition and is also referred to as the solids content of a composition. The partially reacted organo-functional alkoxysilanes in the composition include non-hydrolyzed organo-functional alkoxysilanes, hydrolyzed-organo-functional organo-functional alkoxysilanes, and condensed organo-functional alkoxysilanes, where the condensed organo-functional alkoxysilanes may be partially and/or fully condensed and represent a range of molecular weights.

A composition can have a viscosity less than 100 cps measured using a CAP 2000 viscometer (parallel plate) at 25°C and a shear rate of 50 rpm.

Compositions provided by the present disclosure can exhibit a theoretical density from 0.7 g/cc to 0.9 g/cc, from 0.72 g/cc to 0.88 g/cc, from 0.74 g/cc to 0.86 g/cc, from 0.76 g/cc to 0.84 g/cc, from 0.78 g/cc to 0.81 g/cc, or 0.79 g/cc.

Compositions can be visually clear and are not turbid.

Compositions can be storage stable at room temperature for at least 2 months, at least 3 months, at least 4 months, or for at least 6 months. Storage stability means that the composition remains clear, exhibits a viscosity less than 100 centipoise, and is capable of being used for its intended purpose.

Compositions provided by the present disclosure can include a partially reacted amino-functional alkoxysilane and an organo-functional alkoxysilane having a reactive organic group. The organo-functional group can be selected from, for example, an epoxy group, an alkenyl group, a methacrylate group, and an acrylate group. The organo-functional group may be selected to react with a reactive functional group of an overlying coating or sealant. For example, when an overlying coating is based on thiol-ene chemistry, the organo-functional group can be selected to react with the thiol group or with the alkenyl group. An organo-functional group can be selected to react with a functional group of the overlying coating that participates in the curing reaction. The precursors or prepolymers of the overlying coating may contain reactive functional groups that do not participate in the curing reaction. These groups may be terminal groups or pendant groups. In such embodiments, an organo-functional group can be selected to react with the functional groups that do not participate in the curing reaction of the coating. The partially reacted alkoxysilanes can include a combination of partially hydrolyzed monomeric alkoxysilanes, partially condensed alkoxysilanes, fully hydrolyzed alkoxysilanes and/or fully condensed alkoxysilanes. A partially hydrolyzed alkoxysilane refers to an alkoxysilane in which at least one of the alkoxy groups has been hydrolyzed to provide a hydroxyl group. A partially condensed alkoxysilane refers to an alkoxysilane that has been hydrolyzed and subsequently reacted with a hydroxyl group of another partially or fully hydrolyzed alkoxysilane to form a -Si-O-Si- bond. A partially condensed alkoxysilane will contain at least some unreacted alkoxy and/or hydroxyl group.

Furthermore, it is also possible that a transesterification reaction occurs to some extent between the alcohol solvent and the alkoxysilanes. For example, ethyl groups of a triethoxysilane can be replaced with propyl groups to form (diethoxy)propoxysilanes, (ethoxy)dipropoxysilanes, and/or tripropoxysilanes.

Compositions may also contain fully hydrolyzed and/or fully condensed alkoxysilanes. A fully hydrolyzed alkoxysilane refers to an alkoxysilane in which all of the alkoxy groups are hydrolyzed to provide hydroxy groups. A fully condensed alkoxysilane refers to an alkoxysilane that has been hydrolyzed and subsequently reacted with hydroxyl groups of another partially or fully hydrolyzed alkoxysilane such that the silane group is bonded to three other silane groups by a -Si-O-Si- bond.

Compositions provided by the present disclosure include an amino-functional alkoxysilane and an organo-functional alkoxysilane, where the organo-functional group is reactive with thiol groups. Examples of groups reactive with thiol groups include epoxy groups, alkenyl groups, methacrylate groups, and acrylate groups. Thus, an organo-functional alkoxysilane can be selected from an epoxy-functional alkoxysilane, an alkenyl-functional alkoxysilane, a methacrylate-functional alkoxysilane, an acrylate-functional alkoxysilane, and a combination of any of the foregoing.

Compositions provided by the present disclosure include reactive groups reactive with thiol groups. The reactive groups reactive with thiol groups can react, for example, with reactive thiol groups of a prepolymer or other component of an overlying sealant or coating compositions.

Compositions provided by the present disclosure can consist essentially of a partially reacted organo-functional alkoxysilane, alcohol, and water.

Compositions provided by the present disclosure can be used as primer coatings to improve adhesion of an underlying surface to an overlying coating. Primer coatings provided by the present disclosure are particularly useful in enhancing the adhesion of a thiol-ene based coating to an underlying surface. A thiol-ene based coating refers to a coating formed by the reaction of thiol-functional compounds and alkenyl-functional compounds. For example, the coating may be formed from the reaction of a thiol-functional sulfur-containing prepolymer and an alkenyl-functional curing agent, or from the reaction of an alkenyl-functional prepolymer and a thiol-functional curing agent. A thiol-ene based coating may be cured upon exposure to actinic radiation such as, for example, ultraviolet (UV) radiation.

Examples of UV-curable coatings based on thiol-ene chemistry are provided in U.S. Patent No. 7,438,974, U.S. Application Publication No. 2014/0186543, U.S. Application Publication No. 2013/0345372, U.S. Application Publication No. 2013/0284359, U.S. Application Publication No. 2013/0344287, U.S. Application Publication No. 2012/0040104, U.S. Application Publication No. 2014/0040103, and U.S. Application Publication No. 2015/0086726.

As used herein, the term coating can be used broadly to include, for example, films, coatings, and sealants.

Compositions provided by the present disclosure contain partially reacted alkoxysilanes in alcohol and water. A composition can contain from 5 wt% to 25 wt% of the alkoxysilanes, from 10 wt% to 20 wt%, from 12.5 wt% to 17.5 wt%, or, 15 wt% of the alkoxysilanes, where wt% is based on the total weight of the composition. The compositions are characterized by a viscosity less than 100 cps,

Compositions provided by the present disclosure can contain from 70 wt% to 90 wt% alcohol, from 72 wt% to 88 wt%, or from 75 wt% to 85 wt% alcohol.

In addition to an alcohol such as propanol, compositions provided by the present disclosure include water. Water is added to a composition prior to reaction. In general, following the reaction to form the partially reacted alkoxy silanes, the amount of water in the composition is from 5% to 20%, such as from 10% to 15%, less than the initial amount of water in the unreacted composition. Compositions provided by the present disclosure can contain partially reacted alkoxysilanes include from 0.5 wt% to 10 wt% water, 1 wt% to 7 wt%, 1.5 wt% to 5 wt%, or 2 wt% to 3 wt% water.

Compositions provided by the present disclosure can include water. A composition can comprise from 0.9 to 1.1 equivalents water to alkoxy groups, from 0.95 to 1.05 equivalents, or 1 equivalent, where the number of alkoxy groups is the number of alkoxy groups prior to condensation.

The use of alcohol as a carrier solvent and the low solids content of the composition can be important in maintaining the equilibrium of the partially reacted alkoxysilane and thereby increase the shelf life. The alcoholic solvent, following application to a surface, can also dry rapidly at ambient temperature and humidity, such as at room temperature. For practical application, it is also important that the film be applied with a homogeneous thickness such that the adhesive properties are consistent across the surface of a part. Both thick and thin regions could lead to variable adhesive strength across a surface. The balance of solids content of the composition and the chemical nature of the partially reacted alkoxysilane composition are believed to contribute to the homogeneity of the dried surface film. Furthermore, it is also believed that the drying time of the applied thin film can affect the adhesive strength of the primer coating. For example, it is believed that some migration of the partially reacted alkoxysilane over a surface facilitates reaction of the partially reacted alkoxysilanes with surface functional groups and thereby improves adhesive strength. It is believed that rapid drying may inhibit development of full adhesive strength and that extended drying times may either have no effect or may facilitate formation of in-plane condensed alkoxysilane gels and inhomogeneous films in contrast to facilitating reaction with surface reactive groups.

In general, the adhesive strength of the primer coating is improved by the use of amine-terminated alkoxysilanes. It is believed that the amine groups, in proximity to reactive organo-functional groups, partially catalyze the reaction of the organo-functional groups with functional groups of an overlying coating. Also, in general, the adhesive strength of the primer coating is improved with the addition of dipodal alkoxysilanes. It is believed that dipodal alkoxy silanes create cross-linked networks of condensed alkoxysilanes.

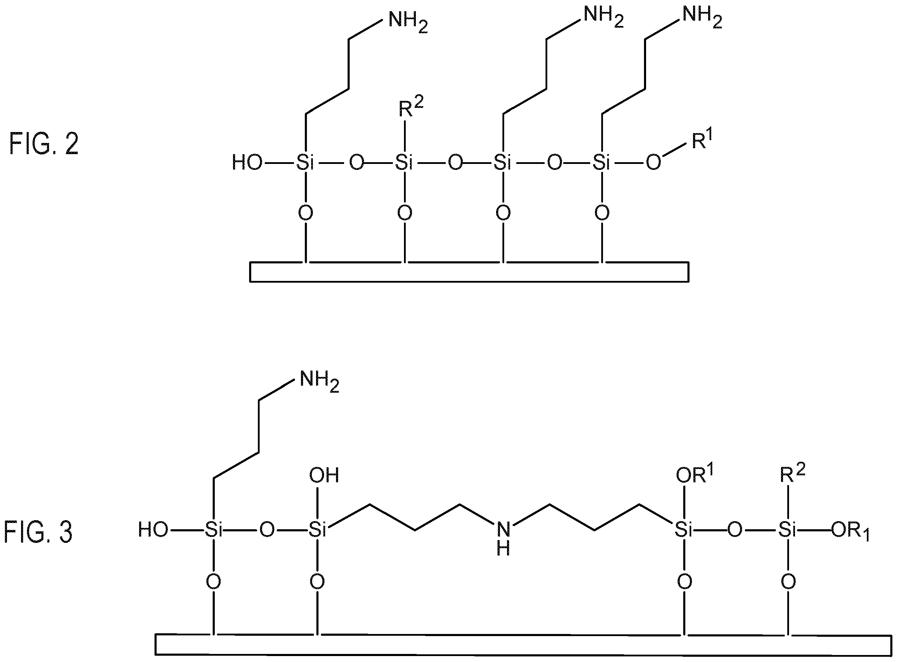

Examples of possible bonding arrangements are shown in FIG. 2 and FIG. 3 where, for example, R¹ can be methyl or ethyl, and R² is an organo-functional group such as alkenyl, epoxy, acrylate, methacrylate or other reactive group. In addition, although not shown, it is believed that when applied to a surface, the partially reacted alkoxysilane composition forms a thin film characterized by a three-dimensional network.

In this regard, it should also be appreciated that partially reacted compositions provided by the present disclosure have been developed to be applied by wiping with an applicator saturated with the composition.

The applied primer composition may not itself cure during the curing of the overlying coating or sealant. Reactions between organo-functional groups on the surface of the primer coating react with functional groups of the coating while the coating is being cured, but it is not believed that further hydrolysis and/or condensation of the partially reacted alkoxysilane thin film takes place while the coating is cured.

Compositions provided by the present disclosure may be prepared by reacting an amino-functional alkoxysilane, an organo-functional alkoxysilane or a mixture of organo-functional alkoxysilanes in the presence of water at elevated temperature to partially react the organo-functional alkoxysilanes.

An organo-functional alkoxysilane can be a organo-functional mono(alkoxysilane) meaning that compound has a single alkoxysilane group, or an organo-functional dialkoxysilane meaning that the compound has two alkoxysilane groups, or a combination of organo-functional mono(alkoxysilane) and an organo-functional bis(alkoxysilane). An organo-functional alkoxysilane can be a polyalkoxysilane includes three or more alkoxysilane groups, such as from 3 to 6 alkoxysilane groups.

An amino-functional alkoxysilane and/or an organo-functional alkoxysilane may be a (monoalkoxy)silane, a (dialkoxy)silane, a (trialkoxy)silane or a combination of any of the foregoing. During reaction the alkoxysilanes are believed to at least partially hydrolyze and/or condense.

An organo-functional alkoxysilane can have the structure of Formula (1):

R⁶-R⁵-Si(-O-R⁴)₃ (1)

wherein,
each R⁴ is independently selected from C₁₋₃ alkyl;
each R⁵ is independently selected from C₁₋₆ alkanediyl and a bond; and
each R⁶ comprises a terminal reactive functional group.

In alkoxysilanes of Formula (1), the reactive functional group can be reactive with a reactive group of a component of an overlying coating. In alkoxysilanes of Formula (1), the reactive functional group can be selected from a primary amine, an alkenyl, an acrylate, a methacrylate, or an epoxy. In alkoxysilanes of Formula (1), R6 can be selected from -CH=CH₂, -O-C(=O)-CH=CH₂, -O-C(=O)-C(-CH₃)=CH₂, or -CH(-O-CH₂-).

In alkoxysilanes of Formula (1), each R⁴ can be independently selected from methyl, ethyl and propyl.

In organo-functional alkoxysilanes of Formula (1), R¹ can comprise a reactive terminal group. The reactive terminal group can be selected to react with reactive functional groups of a sealant or coating composition. For example, in embodiments in which a composition serves as an adhesion layer underlying a sealant based on thiol-ene chemistry, an organo-functional alkoxysilane can include alkenyl terminal groups that are reactive with thiol groups.

Compositions provided by the present disclosure can include organo-functional alkoxysilanes having organo-functional groups reactive with reactive groups of a compound contained in an overlying sealant or coating composition, organo-functional alkoxysilanes having organo-functional groups that are not reactive with reactive groups of an overlying sealant or coating composition, or a combination thereof.

A primer composition can include an amino-functional alkoxysilane.

An amino-functional alkoxysilane can be selected from an amino-functional mono(alkoxysilane) having the structure of Formula (2), an amino-functional di(alkoxysilane) having the structure of Formula (3), or combination thereof:

(NH₂-R⁵-)ₙSi(-O-R⁴)₄-n (2)

(R⁴-O-)₃-Si-(CH₂)ₒ-NH-(CH₂)ₒ-Si-(-O-R⁴)₃ (3)

wherein,
n is selected from 1, 2, and 3;
each o is independently selected from an integer from 1 to 4;
each R⁴ is independently selected from C₁₋₃ alkyl; and
each R⁵ is independently selected from C₁₋₆ alkanediyl and a bond.

In alkoxysilanes of Formula (2), n can be 1, 2, or 3. In alkoxysilanes of Formula (3), each o can be independently selected from 1, 2, 3, or 4. In alkoxysilanes of Formula (2) and Formula (3), each R⁴ can be independently selected from methyl, ethyl, and propyl.

An organo-functional alkoxysilane can include an organo-functional alkoxysilane having the structure of Formula (4):

(R⁶-R⁵-)ₙSi(-O-R⁴)₄₋ₙ (4)

wherein,
n is selected from 1, 2, and 3;
each R⁴ is independently selected from C₁₋₃ alkyl;
each R⁵ is independently selected from C₁₋₆ alkanediyl and a bond; and
each R⁶ comprises a terminal reactive group.

In alkoxysilanes of Formula (4), the reactive functional group can be reactive with a reactive group of a component of an overlying coating. In alkoxysilanes of Formula (4), the reactive functional group can be selected from a primary amine, an alkenyl, an acrylate, a methacrylate, or an epoxy. In alkoxysilanes of Formula (4), R⁶ is selected from-CH=CH₂, -O-C(=O)-CH=CH₂, -O-C(=O)-C(-CH₃)=CH₂, or -CH(-O-CH₂-).

In alkoxysilanes of Formula (4), each R⁴ can be independently selected from methyl, ethyl or propyl.

In alkoxysilanes of Formula (1)-(4), n can be 1, n can be 2, and or n can be 3.

In alkoxysilanes of Formula (1) and (4), R⁶ can be-CH=CH₂, R⁶ can be -O-C(=O)-CH=CH₂, or R⁶ can be -O-C(=O)-C(-CH₃)=CH₂, or R⁶ can be -CH(-O-CH₂-).

In alkoxysilanes of Formula (1)-(4), R⁵ can be methane-diyl, ethane-diyl, 1,2-propane-diyl, C₁₋₃ alkanediyl, C₁₋₄ alkanediyl, or R⁵ is C₁₋₅ alkanediyl.

An organo-functional alkoxysilane can be selected from an amino-functional alkoxysilane, a vinyl-functional alkoxysilane and an acrylate-functional alkoxysilane, a methacrylate-functional alkoxysilane, and a combination of any of the foregoing. A composition can comprise an amino-functional alkoxysilane or another organo-functional alkoxysilane

Examples of suitable amino-functional alkoxysilanes include γ-aminopropyltriethoxysilane, γ-aminopropyltrimethoxysilane, and 3-aminopropylmethyldiethoxysilane.

Other examples of suitable amino-functional alkoxysilanes include 3-aminopropyltriethoxysilne, bis(3-triethoxysilyl)propyl]amine, 3-aminopropyltrimethoxysilne, bis(3-triemethoxysilyl)propylamine, 3-aminopropylmethyldiethoxysilane, 3-aminopropylmethyldimethoxysilane, aminoethylaminopropyltrimethoxysilane, aminoethylaminopropyltriethoxysilane, aminoethylaminopropylmethyldimethoxysilane, diethylenetriaminopropylmethyldimethoxysilane, piperazinylpropylmethyldimethoxysilane, (*N*-phenylamino)methyltrimethoxysilane, (*N*-phenylamino)methyltriethoxysilane, 3-(*N-*phenylamino)propyltrimethoxysilane, diethylaminomethyltriethoxysilane, diethylaminomethylmethyldiethoxysilane, diethylaminopropyltrimethoxysilane, and *N*-(*N-*butyl)-3-aminopropyltrimethoxysilane.

Examples of suitable alkenyl-functional alkoxysilanes include vinyltriethoxy silane, vinyltrimethoxysilane, vinyl-tris-(2-methoxyethoxy)silane 10-undecenylsilane, bis-(y-trimethoxysilylpropyl)amine, vinyltrimethoxysilane, vinyltriethoxysilane, vinyl(tris(2-methoxyethoxy)silane, vinyltrisisopropoxysilane, vinyltris(*tert*-butylperoxysilane, vinyldimethylethoxysilane, vinylmethyldimethoxysilane, and vinylmethyldiethoxysilane.

Examples of suitable acrylate-functional alkoxysilanes include 3-acryloxypropyltrimethoxysilane.

Examples of suitable methacrylate-functional alkoxysilanes include γ-methacryloxypropyltrimethoxysilane, 3-methacryloxypropyltrimethoxysilane, methacryloxypropyltris(trimethylsiloxy)silane, 3-methacryoloxypropyltris-(2-propoxysilane), 3-methacryloxypropyltriethoxysilane, 3-methacryloxoypropylmethyldimethoxysilane, and acryloxypropyltrimethoxysilane.

Examples of suitable bis(alkoxysilanes) include bis-(y-trimethoxysilylpropyl)amine, bis[(3-triethoxysilyl)propyl)amine, bis[(3-trimethoxysilyl)propyl)amine, is(triethoxysilylpropyl)disulfide, bis(triethoxysilylpropyl)tetrasulfide, 1,2-bis(trimethoxysilyl)ethane, and 1,2-bis(triethoxysilyl)ethane.

An organo-functional alkoxysilane can have reactive functional groups that are reactive with reactive groups of a curing agent or crosslinker used to form the overlying coating or sealant.

Examples of suitable dipodal silanes include Gelest SIB 1817.0, 8-bis(triethoxysilyl)octane (Gelest SIB 1824.0), Gelest SIB 1831.0, and 1,2-bis(trimethoxysilyl)decane (Gelest SIB 1829.0), Gelest SIB 1833.0, SIB 1834.0, Gelest SIB 1142.0, Gelest SIB 1824.82, and Gelest SIB 1824.5

Examples of suitable vinyl silanes include methyltris(3-methyoxy propylene glycoxy)silane, vinyltris(3-methoxypropylene glycoxy)silane, and phenyltris(3-methoxypropylene glycoxysilane), Silquest® G-170 silane, and Gelest SIU9048.0 (10-undecenylsilane) .

Examples of suitable epoxy-functional silanes include 2-(3,4-epoxycyclohexyl)ethyltriethoxysilane, 2-(3,4-epoxycyclohexyl)ethyltrimethoxy silane, 5,6-epoxyhexyltriethoxysilane, (3-glycidoxypropyl)triethoxy silane, (3-glycidoxypropyl)trimethoxysilane, (3-glycidoxypropyl)methyldiethoxysilane, (3-glycidoxypropyl)methyldimethoxysilane, and (3-glycidoxypropyl)dimethylethoxysilane

To partially react, e.g., hydrolyze/condense, an organo-functional alkoxysilane or combination of organo-functional alkoxysilanes, the alkoxysilanes can be reacted with water in an alcohol solution.

Examples of suitable alcohols include methanol, n-propanol, isopropanol, n-butanol, butan-2-ol, 2-methylpropan-1-ol, pentan-2-ol, 3-methylbutan-1-ol, 2-methylbutan-1-ol, pentan-3-ol, and combinations of any of the foregoing. The alcohol can be isopropanol.

The reactants can be reacted at a temperature from 50°C to 90°C, from 55°C to 85°C, from 60°C to 85°C, from 60°C to 80°C, from 65°C to 75°C, or at a temperature of 70°C.

The reactants can be reacted at elevated temperature for from 30 minutes to 5 hours, from 45 minutes to 3 hours, from 1 hour to 3 hours, or for 1 hour.

To prepare compositions provided by the present disclosure a stoichiometric amount of water can be reacted with organo-functional alkoxysilanes, where a stoichiometric amount refers to the equivalents of water to alkoxy groups. For example, when organo-functional trialkoxysilanes are used there will be a molar ratio of water to organo-functional trialkoxysilanes of three (3). The molar ratio of water to alkoxy groups can be from 2 to 4, from 2.5 to 3.5, or from 2.8 to 3.2.

The reaction may not include an acid catalyst or may include an acid catalyst.

A bivalent alkoxysilane can have the structure of Formula (3):

(R⁴-O-)₃-Si-(CH₂)ₒ-NH-(CH₂)ₒ-Si-(-O-R⁴)₃ (3)

wherein,
o is selected from 1, 2, and 3; and
each R⁴ is independently selected from C₁₋₃ alkyl.

An alkoxysilane can be reacted with a molar equivalent of water to alkoxy groups. The molar ratio of water to alkoxy groups can be from 0.9 to 1.1, from 0.95 to 1.05 or from 0.97 to 1.03.

An amino-functional alkoxysilane can comprise an amino-functional mono(alkoxysilane), an amino-functional di(alkoxysilane), or a combination thereof.

An amino-functional alkoxysilane can comprise from 50 wt% to 100 wt% of an amino-functional mono(alkoxysilane), from 60 wt% to 90 wt%, from 60 wt% to 80 wt%, or from 70 wt% to 80 wt% of an amino-functional mono(alkoxysilane), wherein wt% represents the total weight of the alkoxysilanes in the composition.

An amino-functional alkoxysilane can comprise from 10 wt% to 50 wt% of an amino-functional bis(alkoxysilane), from 15 wt% to 40 wt%, from 20 wt% to 35 wt% or from 20 wt% to 30 wt% of an amino-functional bis(alkoxysilane), wherein wt% represents the total weight of the alkoxysilanes in the composition.

In addition to an amino-functional mono(alkoxysilane) and/or an amino-functional bis(alkoxysilane), a composition provided by the present disclosure may contain an organo-functional alkoxysilane. For example, a composition may comprise from 10 wt% to 70 wt% of an organo-functional alkoxysilane, from 15 wt % to 60 wt %, from 20 wt % to 60 wt % from, 40 wt % to 60 wt %, or from 45 wt % to 55 wt % of an organo-functional alkoxysilane, wherein wt% represents the total weight of the alkoxysilanes in the composition.

An adhesion-promoting primer composition can comprise a partially reacted epoxy-functional alkoxysilane.

Examples of suitable epoxy-functional alkoxysilanes include β-(3,4-epoxycyclohexyl)ethyltrimethoxysilane, γ-glycidoxypropyltrimethoxysilane, γ-glycidoxypropyltriethoxysilane, 3-glycidoxypropyltrimethoxysilane, 3-glycidoxypropyltriethoxysilane, 3-glycidoxypropylmethyldiethoxysilane, 3-glycidoxypropylmethyldimethoxysilane, 2-(3,4-epoxycyclohexyl)-ethyltrimethoxysilane, 2-(3,4-epoxycyclohexyl)-ethyltriethoxysilane, and a combination of any of the foregoing. An epoxy-functional alkoxysilane can comprise a cycloepoxy-functional alkoxysilane such as, for example, β-(3,4-epoxycyclohexyl)ethyltrimethoxysilane.

In addition to an epoxy-functional alkoxysilane, the composition may contain one or more additional organo-functional alkoxysilanes such as, for example, an amino-functional alkoxysilane.

Partially reacted epoxy-functional alkoxysilane-containing compositions can be prepared by combining an epoxy-functional alkoxysilane, water, and alcohol, and an optional organo-functional alkoxysilane, and allowing the mixture to react. When the epoxy-functional alkoxysilane is β-(3,4-epoxycyclohexyl)ethyltrimethoxysilane, the reaction of water and the epoxy-functional alkoxysilane can be mildly exothermic. In these cases, heating the mixture is not necessary. In such cases, the water and epoxy-functional alkoxysilane can be combined, the condensation reaction can be allowed to occur for a suitable period of time such as, for example, 30 minutes, and the condensation reaction quenched with the addition of alcohol.

Compositions provided by the present disclosure can be prepared from a mixture having a combination of partially reacted amino-functional alkoxysilanes and organo-functional alkoxysilanes. A composition can be formed from a mixture having from 30 mol% to 90 mol% of amino-functional alkoxysilanes, from 30 mol% to 80 mol%, from 40 mol% to 70 mol%, from 40 mol% to 60 mol%, or from 45 mol% to 55 mol% of amino-functional alkoxysilanes, where mol% refers to the total moles of amino-functional alkoxysilanes and organo-functional alkoxysilanes in the composition. A composition can include from 40 mol% to 50 mol% of amino-functional alkoxysilanes and from 40 mol% to 50 mol% of organo-functional alkoxysilanes. A composition can include from 45 mol% to 55 mol% of amino-functional alkoxysilanes and from 45 mol% to 55 mol% of organo-functional alkoxysilanes.

Compositions formed using epoxy-functional alkoxysilanes are particularly useful in improving adhesion of coating and sealant compositions containing thiol-terminated prepolymers where it is believed that the epoxy group reacts with the thiol group of the prepolymer during curing of the coating or sealant.

Compositions having partially reacted organo-functional alkoxysilanes can be used to provide coatings such as primer coatings that provided enhanced adhesion of an overlying coating or sealant to a substrate surface. In particular, enhanced adhesion is realized when the compositions contain reactive functional groups that are reactive with functional groups of the overlying coating such that during curing, the partially reacted organo-functional alkoxysilanes react with the binder coating and are covalently bound to components of the coating binder. For example, a composition can include groups that are reactive with thiol groups and the coating binder will include reactive thiol groups.

Sulfur-containing polymers are known to be useful in aerospace sealant applications. Thus, aerospace sealants comprising sulfur-containing prepolymers such as, for example polythioether prepolymers, sulfur-containing polyformal prepolymers, polysulfide prepolymers, and combinations of any of the foregoing. Sulfur-containing polymers contain reactive terminal groups selected depending upon a particular curing chemistry. The adhesion-promoting primer compositions provided by the present disclosure are useful in enhancing the surface adhesion of any overlying coating or sealant, regardless of the curing chemistry. However, it can be desirable that the adhesion-promoting primer composition contain reactive groups that can react with reactive groups of the overlying coating or sealant and thereby cross-link with the polymer network. The reactive groups of an adhesion-promoting primer composition may react with the prepolymer or with the curing agent.

An overlying coating or sealantcan be based on a thiol-ene curing chemistry. Such sealants can include a thiol-terminated sulfur-containing prepolymer and a polyene curing agent. Examples of aerospace sealants based on thiol-ene chemistries are provided in U.S. Patent No. 7,438,974, U.S. Application Publication No. 2014/0186543, U.S. Application Publication No. 2013/0345372, U.S. Application Publication No. 2013/0284359, U.S. Application Publication No. 2013/0344287, U.S. Application Publication No. 2012/0040104, and U.S. Application Publication No. 2014/0040103. Aerospace sealants and coatings based on thiol-ene curing chemistry are curable using actinic radiation such as by exposure to UV radiation. Such sealants and coatings are referred to as UV-curable sealants. Using UV light sources at a dosage, for example, from 500 mJ to 1,500 mJ, such compositions having a thickness up to several inches can be cured in less than 2 minutes. A sealant may include fillers and/or pigments that maintain a visually transparent or translucent appearance.

Compositions of the present disclosure may contain an essentially stoichiometric equivalent amount of thiol groups to alkenyl groups in order to obtain a cured sealant having acceptable sealant properties as described herein upon exposure of the composition to actinic radiation. As used herein, "essentially stoichiometric equivalent" means that the number of thiol groups and alkenyl groups present in the compositions differ by no more than 10% from each other, in some cases, no more than 5% or, in some cases, no more than 1% or no more than 0.1%. In some cases, the number of thiol groups and alkenyl groups present in the composition are equal. Moreover, as will be appreciated, the source of alkenyl groups in the compositions of the present disclosure can include other components such as ethylenically unsaturated silane adhesion promoter as well as the other alkenyl-terminated compounds included in the composition. An ethylenically unsaturated silane described herein can be present in an amount such that 0.1 to 30, such as 1 to 30, or, in some cases, 10 to 25 percent of the total number of ethylenically unsaturated groups present in the composition are part of an ethylenically unsaturated silane molecule, based on the number of ethylenically unsaturated groups in the composition.

In addition to one or more thiol-terminated sulfur-containing prepolymers, a coating or sealant composition useful with a partially reacted alkoxysilane primer coating provided by the present disclosure includes a polyalkenyl curing agent, and optionally a hydroxyl-functional vinyl ether, an adhesion promoter, a photoinitiator, filler, and a combination of any of the foregoing.

Coatings and sealant formulations useful with the organo-functional alkoxysilane primers include a thiol-terminated polythioether prepolymer.

Examples of suitable thiol-terminated polythioether prepolymers are disclosed, for example, in U.S. Patent No. 6,172,179. Polythioether sealant compositions curable by actinic radiation such as UV radiation are described in U.S. Application Publication No. 2012/0040104 and U.S. Application Publication No. 2013/0284359.

A thiol-terminated polythioether prepolymer can comprise a thiol-terminated polythioether prepolymer comprising a backbone comprising the structure of Formula (5):

-R¹-[-S-(CH₂)₂-O-[-R²-O-]ₘ-(CH₂)₂-S-R¹]ₙ- (5)

wherein,
each R¹ is independently selected from a C₂₋₁₀ n-alkanediyl group, a C₃₋₆ branched alkanediyl group, a C₆₋₈ cycloalkanediyl group, a C₆₋₁₀ alkanecycloalkanediyl group, a heterocyclic group, a -[(-CHR³-)ₚ-X-]_{q}-(CHR³)ᵣ- group, wherein each R³ is selected from hydrogen and methyl;
each R² is independently selected from a C₂₋₁₀ n-alkanediyl group, a C₃₋₆ branched alkanediyl group, a C₆₋₈ cycloalkanediyl group, a C₆₋₁₄ alkanecycloalkanediyl group, a heterocyclic group, and a -[(-CH₂-)ₚ-X-]_{q}-(CH₂)ᵣ- group;
each X is independently selected from O, S, and -NR-, wherein R is selected from hydrogen and methyl;
m ranges from 0 to 50;
n is an integer ranging from 1 to 60;
p is an integer ranging from 2 to 6;
q is an integer ranging from 1 to 5; and
r is an integer ranging from 2 to 10.

In thiol-terminated polythioether prepolymers of Formula (5), R¹ can be -[-(CHR³)ₚ-X-]_{q}-(CHR³)ᵣ- wherein each X can be independently selected from -O- and -S-. In prepolymers of Formula (5) wherein R¹ is -[-(CHR³)ₚ-X-]_{q}-(CHR³)ᵣ-, each X can be -O- or each X is -S-.

In thiol-terminated polythioether prepolymers of Formula (5), R¹ can be -[-(CH₂)ₚ-X-]_{q}-(CH₂)ᵣ- wherein each X can be independently selected from -O- and -S-. In prepolymers of Formula (5) wherein R¹ is -[-(CH₂)ₚ-X-]_{q}-(CH₂)ᵣ-, each X can be -O- or each X is -S-.

In thiol-terminated polythioether prepolymers of Formula (5), R¹can be -[(-CH₂-)ₚ-X-]_{q}-(CH₂)ᵣ-, where p can be 2, X can be O, q can be 2, r can be 2, R² can be ethanediyl, m can be 2, and n can be 9.

In thiol-terminated polythioether prepolymers of Formula (5), each R¹ can be derived from dimercaptodioxaoctane (DMDO) or each R¹ is derived from dimercaptodiethylsulfide (DMDS).

In thiol-terminated polythioether prepolymersof Formula (5), each m can be independently an integer from 1 to 3. Each m can be the same and can be 1, 2, or 3.

In thiol-terminated polythioether prepolymers of Formula (5), n can be an integer from 1 to 30, an integer from 1 to 20, an integer from 1 to 10, or an integer from 1 to 5. In addition, n may be any integer from 1 to 60.

In thiol-terminated polythioether prepolymers of Formula (5), each p can be independently selected from 2, 3, 4, 5, and 6. Each p can be the same and can be 2, 3, 4, 5, or 6.

Examples of suitable thiol-terminated polythioether prepolymers are disclosed, for example, in U.S. Patent No. 6,172,179. A thiol-terminated polythioether prepolymer can comprise Permapol® P3.1E, available from PRC-DeSoto International Inc., Sylmar, CA.

A thiol-terminated polythioether prepolymer can comprise a thiol-terminated polythioether prepolymer selected from a thiol-terminated polythioether of Formula (6a), a thiol-terminated polythioether prepolymer of Formula (6b), and a combination thereof:

HS-R¹-[-S-(CH₂)₂-O-(R²-O)ₘ(CH₂)₂-S-R¹-]ₙ-SH (6a)

{HS-R¹-[-S-(CH₂)₂-O-(R²-O)ₘ-(CH₂)₂-S-R¹-]ₙ-S-V'-}_{z}B (6b)

wherein,
each R¹ independently is selected from C₂₋₁₀ alkanediyl, C₆₋₈ cycloalkanediyl, C₆₋₁₄ alkanecycloalkanediyl, C₅₋₈ heterocycloalkanediyl, and -[(-CHR³-)ₚ-X-]_{q}-(-CHR³-)ᵣ-, wherein,
   p is an integer from 2 to 6;
   q is an integer from 1 to 5;
   r is an integer from 2 to 10;
   each R³ is independently selected from hydrogen and methyl; and
   each X is independently selected from -O-, -S-, and -NR-, wherein
R is selected from hydrogen and methyl;
each R² is independently selected from C₁₋₁₀ alkanediyl, C₆₋₈ cycloalkanediyl, C₆₋₁₄ alkanecycloalkanediyl, and -[(-CHR³-)ₚ-X-]_{q}-(-CHR³-)ᵣ-, wherein s, q, r, R³, and X are as defined as for R¹;
m is an integer from 0 to 50;
n is an integer from 1 to 60;
B represents a core of a z-valent, polyfunctionalizing agent B(-V)_{z} wherein,
   z is an integer from 3 to 6; and
   each V is a moiety comprising a terminal group reactive with a thiol;
   and
each -V'- is derived from the reaction of-V with a thiol.

In thiol-terminated polythioether prepolymers of Formula (6a) and in Formula (6b), R¹ can be -[(-CH₂-)ₚ-X-]_{q}-(CH₂)ᵣ-, where p can be 2, X can be -O-, q can be 2, r can be 2, R² can be ethanediyl, m can be 2, and n can be 9.

In thiol-terminated polythioether prepolymers of Formula (6a) and Formula (6b), R¹ can be selected from C₂₋₆ alkanediyl and -[-(CHR³)ₚ-X-]_{q}-(CHR³)ᵣ-.

In thiol-terminated polythioether prepolymers of Formula (6a) and Formula (6b), R¹ can be -[-(CHR³)ₚ-X-]_{q}-(CHR³)ᵣ-, or X can be -O- or X can be -S-.

In thiol-terminated polythioether prepolymers of Formula (6a) and Formula (6b), where R¹ is -[-(CHR³)ₚ-X-]_{q}-(CHR³)ᵣ-, p can be 2, r can be 2, q can be 1, and X can be -S-; or p can be 2, q can be 2, r can be 2, and X can be -O-; or p can be 2, r can be 2, q can be 1, and X can be -O-.

In thiol-terminated polythioether prepolymers of Formula (6a) and Formula (6b), where R¹ is -[-(CHR³)ₚ-X-]_{q}-(CHR³)ᵣ-, each R³ can be hydrogen, or at least one R³ is methyl.

In thiol-terminated polythioether prepolymers of Formula (6a) and Formula (6b), each R¹ can be the same, or at least one R¹ is different.

Various methods can be used to prepare thiol-terminated polythioethers of Formula (6a) and Formula (6b). Examples of suitable thiol-terminated polythioethers, and methods for their production, are described in U.S. Patent No. 6,172,179. Such thiol-terminated polythioethers may be difunctional, that is, linear polymers having two terminal thiol groups, or polyfunctional, that is, branched polymers have three or more terminal thiol groups. Suitable thiol-terminated polythioethers are commercially available, for example, as Permapol® P3.1E, from PRC-DeSoto International Inc., Sylmar, CA.

A thiol-terminated polythioether prepolymer may comprise a mixture of different thiol-terminated polythioethers and the thiol-terminated polythioethers may have the same or different functionality. A thiol-terminated polythioether prepolymer can have an average functionality from 2 to 6, from 2 to 4, from 2 to 3, from 2.05 to 2.8, or from 2.05 to 2.5. For example, a thiol-terminated polythioether prepolymer can be selected from a difunctional thiol-terminated polythioether, a trifunctional thiol-terminated polythioether and a combination thereof.

A thiol-terminated polythioether prepolymer can be prepared by reacting a polythiol and a diene such as a divinyl ether, and the respective amounts of the reactants used to prepare the polythioethers are chosen to yield terminal thiol groups. Thus, in some cases, (n or >n, such as n+1) moles of a polythiol, such as a dithiol or a mixture of at least two different dithiols and 0.05 moles to 1 moles, such as 0.1 moles to 0.8 moles, of a thiol-terminated polyfunctionalizing agent may be reacted with (n) moles of a diene, such as a divinyl ether, or a mixture of at least two different dienes, such as a divinyl ether. A thiol-terminated polyfunctionalizing agent can be present in the reaction mixture in an amount sufficient to provide a thiol-terminated polythioether having an average functionality of from 2.05 to 3, such as from 2.1 to 2.8, or from 2.1 to 2.6.

The reaction used to make a thiol-terminated polythioether prepolymer may be catalyzed by a free radical catalyst. Suitable free radical catalysts include azo compounds, for example azobisnitrile compounds such as azo(bis)isobutyronitrile (AIBN); organic peroxides, such as benzoyl peroxide and t-butyl peroxide; and inorganic peroxides, such as hydrogen peroxide. The reaction can also be effected by irradiation with ultraviolet light either with or without a radical initiator/photosensitizer. Ionic catalysis methods, using either inorganic or organic bases, e.g., triethylamine, may also be used.

Suitable thiol-terminated polythioether prepolymers may be produced by reacting a divinyl ether or a mixture of divinyl ethers with an excess of dithiol or a mixture of dithiols.

Thus, a thiol-terminated polythioether prepolymer can comprise the reaction product of reactants comprising:
(a) a dithiol of Formula (7):

   HS-R¹-SH (7)

   wherein,
   R¹ is selected from C₂₋₆ alkanediyl, C₆₋₈ cycloalkanediyl, C₆₋₁₀ alkanecycloalkanediyl, C₅₋₈ heterocycloalkanediyl, and -[-(CHR³)ₚ-X-]_{q}-(CHR³)ᵣ-; wherein,
   each R³ is independently selected from hydrogen and methyl;
   each X is independently selected from -O-, -S-, -NH-, and -NR- wherein R is selected from hydrogen and methyl;
   p is an integer from 2 to 6;
   q is an integer from 1 to 5; and
   r is an integer from 2 to 10; and
(b) a divinyl ether of Formula (4):

   CH₂=CH-O-[-R²-O-]ₘ-CH=CH₂ (8)

   wherein,
   each R² is independently selected from C₁₋₁₀ alkanediyl, C₆₋₈ cycloalkanediyl, C₆₋₁₄ alkanecycloalkanediyl, and -[(-CHR³-)ₚ-X-]_{q}-(-CHR³-)ᵣ-, wherein s, q, r, R³, and X are as defined above;
   m is an integer from 0 to 50; and
   n is an integer from 1 to 60.
Or, the reactants may comprise (c) a polyfunctional compound such as a polyfunctional compound B(-V)_{z}, where B, -V, and z are as defined herein.

Dithiols suitable for use in preparing thiol-terminated polythioether prepolymers include those having the structure of Formula (7):

HS-R¹-SH (7)

wherein,
R¹ is selected from C₂₋₆ alkanediyl, C₆₋₈ cycloalkanediyl, C₆₋₁₀ alkanecycloalkanediyl, C₅₋₈ heterocycloalkanediyl, and -[-(CHR³)ₚ-X-]_{q}-(CHR³)ᵣ-; wherein,
   each R³ is independently selected from hydrogen and methyl;
   each X is independently selected from -O-, -S-, and -NR- wherein
R is selected from hydrogen and methyl;
   p is an integer from 2 to 6;
   q is an integer from 1 to 5; and
   r is an integer from 2 to 10.

In a dithiol of Formula (7), R¹ can be -[-(CHR³)ₚ-X-]_{q}-(CHR³)ᵣ-.

In a compound of Formula (7), X can be selected from -O- and -S-, and thus -[-(CHR³)ₚ-X-]_{q}-(CHR³)ᵣ- in Formula (7) can be -[(-CHR³-)ₚ-O-]_{q}-(CHR³)ᵣ- or-[(-CHR³₂-)ₚ-S-]_{q}-(CHR³)ᵣ-. In a compound of Formula (7), p and r can be equal, such as where p and r are both two.

In a dithiol of Formula (7), R¹ can be selected from C₂₋₆ alkanediyl and -[-(CHR³)ₚ-X-]_{q}-(CHR³)ᵣ-.

In a dithiol of Formula (7), R¹ is -[-(CHR³)ₚ-X-]_{q}-(CHR³)ᵣ-, and X can be -O-, or X can be -S-.

In a dithiol of Formula (7) where R¹ can be -[-(CHR³)ₚ-X-]_{q}-(CHR³)ᵣ-, p can be 2, r can be 2, q can be 1, and X can be -S-; or where p can be 2, q can be 2, r can be 2, and X can be -O-; or p can be 2, r can be 2, q can be 1, and X can be -O-.

In a dithiol of Formula (7) where R¹ can be -[-(CHR³)ₚ-X-]_{q}-(CHR³)ᵣ-, each R³ is hydrogen, or at least one R³ can be methyl.

In a dithiol of Formula (7), each R¹ can be derived from dimercaptodioxaoctane (DMDO) or each R¹ can be derived from dimercaptodiethylsulfide (DMDS).

In a dithiol of Formula (7), each m can be independently an integer from 1 to 3. Each m can be the same and can be 1, 2, or 3.

In a dithiol of Formula (7), n can be an integer from 1 to 30, an integer from 1 to 20, an integer from 1 to 10, or an integer from 1 to 5. In addition, n may be any integer from 1 to 60.

In a dithiol of Formula (7), each p can be independently selected from 2, 3, 4, 5, and 6. Each p can be the same and can be 2, 3, 4, 5, or 6.

Examples of suitable dithiols include 1,2-ethanedithiol, 1,2-propanedithiol, 1,3-propanedithiol, 1,3-butanedithiol, 1,4-butanedithiol, 2,3-butanedithiol, 1,3-pentanedithiol, 1,5-pentanedithiol, 1,6-hexanedithiol, 1,3-dimercapto-3-methylbutane, dipentenedimercaptan, ethylcyclohexyldithiol (ECHDT), dimercaptodiethylsulfide, methyl-substituted dimercaptodiethylsulfide, dimethyl-substituted dimercaptodiethylsulfide, dimercaptodioxaoctane, 1,5-dimercapto-3-oxapentane, and a combination of any of the foregoing.

A dithiol may have one or more pendant groups selected from a lower alkyl group, a lower alkoxy group, and a hydroxy group. Suitable alkyl pendent groups include, for example, C₁₋₃ alkyl, C₁₋₆ linear alkyl, C₃₋₆ branched alkyl, cyclopentyl, and cyclohexyl.

Other examples of suitable dithiols include dimercaptodiethylsulfide (DMDS) (in Formula (7), R¹ is -[(-CH₂-)ₚ-X-]_{q}-(CH₂)ᵣ-, wherein p is 2, r is 2, q is 1, and X is -S-); dimercaptodioxaoctane (DMDO) (in Formula (7), R¹ is -[(-CH₂-)ₚ-X-]_{q}-(CH₂)ᵣ-, wherein p is 2, q is 2, r is 2, and X is -O-); and 1,5-dimercapto-3-oxapentane (in Formula (7), R¹ is -[(-CH₂-)ₚ-X-]_{q}-(CH₂)ᵣ-, wherein p is 2, r is 2, q is 1, and X is -O-). It is also possible to use dithiols that include both heteroatoms in the carbon backbone and pendant alkyl groups, such as methyl groups. Such compounds include, for example, methyl-substituted DMDS, such as HS-CH₂CH(CH₃)-S-CH₂CH₂-SH, HS-CH(CH₃)CH₂-S-CH₂CH₂-SH and dimethyl substituted DMDS, such as HS-CH₂CH(CH₃)-S-CHCH₃CH₂-SH and HS-CH(CH₃)CH₂-S-CH₂CH(CH₃)-SH.

Suitable divinyl ethers for preparing thiol-terminated polythioethers include, for example, divinyl ethers of Formula (8):

CH₂=CH-O-(-R²-O-)ₘ-CH=CH₂ (8)

where m is an integer from 0 to 50; R² in Formula (8) is selected from a C₂₋₆ n-alkanediyl group, a C₃₋₆ branched alkanediyl group, a C₆₋₈ cycloalkanediyl group, a C₆₋₁₀ alkanecycloalkanediyl group, and -[(-CH₂-)ₚ-O-]_{q}-(-CH₂-)ᵣ-, where sp is an integer ranging from 2 to 6, q is an integer from 1 to 5, and r is an integer from 2 to 10. In a divinyl ether of Formula (4), R² can be a C₂₋₆ n-alkanediyl group, a C₃₋₆ branched alkanediyl group, a C₆₋₈ cycloalkanediyl group, a C₆₋₁₀ alkanecycloalkanediyl group, or -[(-CH₂-)ₚ-O-]_{q}-(-CH₂-)ᵣ-.

Suitable divinyl ethers include, for example, compounds having at least one oxyalkanediyl group, such as from 1 to 4 oxyalkanediyl groups, i.e., compounds in which m in Formula (8) is an integer ranging from 1 to 4. The variable m in Formula (8) can be an integer ranging from 2 to 4. It is also possible to employ commercially available divinyl ether mixtures that are characterized by a non-integral average value for the number of oxyalkanediyl units per molecule. Thus, m in Formula (8) can also take on rational number values ranging from 0 to 10.0, such as from 1.0 to 10.0, from 1.0 to 4.0, or from 2.0 to 4.0.

Examples of suitable vinyl ethers include, divinyl ether, ethylene glycol divinyl ether (EG-DVE) (R² in Formula (8) is ethanediyl and m is 1), butanediol divinyl ether (BD-DVE) (R² in Formula (8) is butanediyl and m is 1), hexanediol divinyl ether (HD-DVE) (R² in Formula (8) is hexanediyl and m is 1), diethylene glycol divinyl ether (DEG-DVE) (R² in Formula (8) is ethanediyl and m is 2), triethylene glycol divinyl ether (R² in Formula (8) is ethanediyl and m is 3), tetraethylene glycol divinyl ether (R² in Formula (8) is ethanediyl and m is 4), cyclohexanedimethanol divinyl ether, polytetrahydrofuryl divinyl ether; trivinyl ether monomers, such as trimethylolpropane trivinyl ether; tetrafunctional ether monomers, such as pentaerythritol tetravinyl ether; and combinations of two or more such polyvinyl ether monomers. A polyvinyl ether may have one or more pendant groups selected from alkyl groups, hydroxy groups, alkoxy groups, and amine groups.

Divinyl ethers in which R² in Formula (8) can be C₃₋₆ branched alkanediyl may be prepared by reacting a polyhydroxy compound with acetylene. Examples of divinyl ethers of this type include compounds in which R² in Formula (8) is an alkyl-substituted methanediyl group such as -CH(-CH₃)-, for which R² in Formula (8) is ethanediyl and m is 3 or an alkyl-substituted ethanediyl.

Other useful divinyl ethers include compounds in which R² in Formula (8) is polytetrahydrofuryl (poly-THF) or polyoxyalkanediyl, such as those having an average of 3 monomer units.

Two or more types of polyvinyl ether monomers of Formula (8) may be used. Thus, two dithiols of Formula (7) and one polyvinyl ether monomer of Formula (8), one dithiol of Formula (7) and two polyvinyl ether monomers of Formula (8), two dithiols of Formula (7) and two divinyl ether monomers of Formula (8), and more than two compounds of one or both Formula (7) and Formula (8), may be used to produce a variety of thiol-terminated polythioethers.

A polyvinyl ether monomer can comprise 20 to less than 50 mole percent of the reactants used to prepare a thiol-terminated polythioether, or 30 to less than 50 mole percent.

Relative amounts of dithiols and divinyl ethers can be selected to yield polythioethers having terminal thiol groups. Thus, a dithiol of Formula (7) or a mixture of at least two different dithiols of Formula (7), can be reacted with of a divinyl ether of Formula (8) or a mixture of at least two different divinyl ethers of Formula (8) in relative amounts such that the molar ratio of thiol groups to alkenyl groups is greater than 1:1, such as from 1.1 to 2.0:1.0.

The reaction between dithiols and divinyl ethers and/or polythiols and polyvinyl ethers may be catalyzed by a free radical catalyst. Suitable free radical catalysts include, for example, azo compounds, for example azobisnitriles such as azo(bis)isobutyronitrile (AIBN); organic peroxides such as benzoyl peroxide and t-butyl peroxide; and inorganic peroxides such as hydrogen peroxide. The catalyst may be a free-radical catalyst, an ionic catalyst, or ultraviolet radiation. The catalyst may not comprise acidic or basic compounds, and may not produce acidic or basic compounds upon decomposition. Examples of free-radical catalysts include azo-type catalyst, such as Vazo®-57 (Du Pont), Vazo®-64 (Du Pont), Vazo®-67 (Du Pont), V-70® (Wako Specialty Chemicals), and V-65B® (Wako Specialty Chemicals). Examples of other free-radical catalysts are alkyl peroxides, such as t-butyl peroxide. The reaction may also be effected by irradiation with ultraviolet light either with or without a cationic photoinitiating moiety.

Thiol-terminated polythioether prepolymers provided by the present disclosure may be prepared by combining at least one dithiol of Formula (7) and at least one divinyl ether of Formula (8) followed by addition of an appropriate catalyst, and carrying out the reaction at a temperature from 30°C to 120°C, such as 70°C to 90°C, for a time from 2 hours to 24 hours, such as 2 hours to 6 hours.

As disclosed herein, thiol-terminated polythioether prepolymers may comprise a polyfunctional polythioether prepolymer, i.e., may have an average functionality of greater than 2.0. Suitable polyfunctional thiol-terminated polythioethers include, for example, those having the structure of Formula (6b):

{HS-R¹-[-S-(CH₂)₂-O-(R²-O)ₘ-(CH₂)₂-S-R¹-]ₙ-S-V'-}_{z}B (6b)

wherein z has an average value of greater than 2.0, or a value between 2 and 3, a value between 2 and 4, a value between 3 and 6, or z can be an integer from 3 to 6.

Polyfunctionalizing agents suitable for use in preparing such polyfunctional thiol-terminated polymers include trifunctionalizing agents, that is, compounds where z is 3. Suitable trifunctionalizing agents include, for example, triallyl cyanurate (TAC), 1,2,3-propanetrithiol, isocyanurate-containing trithiols, and combinations thereof, as disclosed in U.S. Application Publication No. 2010/0010133, and isocyanurates as disclosed, for example, in U.S. Application Publication No. 2011/0319559. Other useful polyfunctionalizing agents include trimethylolpropane trivinyl ether, and the polythiols described in U.S. Patent No. 4,366,307, U.S. Patent No. 4,609,762, and U.S. Patent No. 5,225,472. Mixtures of polyfunctionalizing agents may also be used. As a result, polythioethers provided by the present disclosure may have a wide range of average functionality. For example, trifunctionalizing agents may afford average functionalities from 2.05 to 3.0, such as from 2.1 to 2.6. Wider ranges of average functionality may be achieved by using tetrafunctional or higher functionality polyfunctionalizing agents. Functionality may also be determined by factors such as stoichiometry, as will be understood by those skilled in the art.

A sulfur-containing polymer can be thiol-terminated. Examples of thiol-functional polythioethers are disclosed, for example in U.S. Patent No. 6,172,179. A thiol-terminated polythioether can comprise Permapol® P3.1E, available from PRC-DeSoto International Inc., Sylmar, CA. A thiol-terminated polymer can comprise a mixture of thiol-terminated polythioethers having an average functionality from 2 to 3, or from 2.2 to 2.8. A thiol-terminated polythioether can comprise Permapol® 3.1E, available from PRC-DeSoto International.

In addition or instead of a thiol-terminated polythioether prepolymer, a coating or sealant composition may include one or more additional thiol-terminated sulfur-containing prepolymers such as a thiol-terminated sulfur-containing polyformal, a thiol-terminated polysulfide, a backbone-modified derivative thereof, or a combination of any of the foregoing.

Coatings or sealants useful with primer coatings provided by the present disclosure can comprise a polyalkenyl curing agent. A polyalkenyl refers to a compound having two or more reactive alkenyl groups (-CH=CH₂). A polyalkenyl resin can be difunctional or can include a combination of polyalkenyls having different alkenyl functionalities. A polyalkenyl may include a combination of polyalkenyl resins. A polyalkenyl resin can be liquid at room temperature. A polyalkenyl curing agent can be selected from a polyallyls compound, a polyvinyl ether, and a combination thereof. A polyallyl compound can comprise reactive -CR₂-CH=CH₂ groups where each R can be hydrogen or another substituent, and a vinyl ether comprise reactive -O-CH=CH₂ groups.

A polyalkenyl compound present in an uncured sealant composition can comprise a tri-alkenyl compound, which refers to compounds comprising three terminal alkenyl groups and which include, for example, triallyl cyanurate (TAC) and/or triallyl isocyanurate (TAIC).

A polyalkenyl compound can comprise a polyvinyl ether. Suitable polyvinyl ethers include, for example, those represented by Formula (8):

CH₂=CH-O-(-R⁵-O-)ₘ-CH=CH₂ (8)

where R⁵ in Formula (8) is a C₂₋₆ n-alkanediyl group, a C₂₋₆ branched alkanediyl group, a C₆₋₈ cycloalkanediyl group, a C₆₋₁₀ alkanecycloalkanediyl group, or -[(-CH₂-)ₚ-O-]_{q}-(-CH₂-)ᵣ-, where p is an integer having a value ranging from 2 to 6, q is an integer having a value ranging from 1 to 5, and r is an integer having a value ranging from 2 to 10.

The materials of Formula (8) are divinyl ethers. Suitable divinyl ethers include those compounds having at least one oxyalkanediyl group, such as from 1 to 4 oxyalkanediyl groups, i.e., those compounds in which m in Formula (8) is an integer from 1 to 4. In some cases, m in Formula (8) is an integer from 2 to 4. It is also possible to employ commercially available divinyl ether mixtures to produce the polymers of the present disclosure. Such mixtures are characterized by a non-integral average value for the number of oxyalkanediyl units per molecule. Thus, m in Formula (8) can also take on rational number values between 0 and 10.0, such as between 1.0 and 10.0, between 1.0 and 4.0, or between 2.0 and 4.0.

Suitable divinyl ether monomers for use in the present disclosure include, for example, divinyl ether, ethylene glycol divinyl ether (EG-DVE) (R⁵ in Formula (8) is ethylene and m is 1), butanediol divinyl ether (BD-DVE) (R⁵ in Formula (8) is butylene and m is 1), hexanediol divinyl ether (HD-DVE) (R⁵ in Formula (8) is hexylene and m is 1), diethylene glycol divinyl ether (DEG-DVE) (R⁵ in Formula (8) is ethylene and m is 2), triethylene glycol divinyl ether (R⁵ in Formula (8) is ethylene and m is 3), tetraethylene glycol divinyl ether (R⁵ in Formula (8) is ethylene and m is 4), cyclohexanedimethanol divinyl ether, polytetrahydrofuryl divinyl ether and mixtures thereof. In some cases, trivinyl ether monomers, such as trimethylolpropane trivinyl ether; tetrafunctional ether monomers, such as pentaerythritol tetravinyl ether; and mixtures of two or more such polyvinyl ether monomers can be used. The polyvinyl ether material can have one or more pendent groups selected from alkyl groups, hydroxyl groups, alkoxy groups and amine groups. A divinyl ether can comprise triethylene glycol divinyl ether.

Useful divinyl ethers in which R⁵ in Formula (8) is C₂₋₆ branched alkanediyl can be prepared by reacting a polyhydroxy compound with acetylene. Examples of compounds of this type include compounds in which R⁵ in Formula (8) is an alkyl-substituted methylene group such as -CH(CH3)- (for example Pluriol® blends such as Pluriol® E-200 divinyl ether (BASF Corp. of Parsippany, NJ), for which R⁵ in Formula (8) is ethylene and m is 3.8) or an alkyl-substituted ethylene (for example -CH₂CH(CH₃)- such as DPE polymeric blends including DPE-2 and DPE-3 (International Specialty Products, Wayne, NJ)).

Other useful divinyl ethers include compounds in which R⁵ in Formula (8) is polytetrahydrofuryl (poly-THF) or polyoxyalkanediyl, such as those having an average of about 3 monomer units.

Two or more divinyl ether monomers of the Formula (8) can be used.

A polyalkenyl curing agent can include a compound selected from a triallyl compound, a triviny ether, and a combination thereof.

Coatings and sealants useful with primer coatings provided by the present disclosure may comprise a photoinitiator. Particularly when the cured sealant is to be formed by exposure of an uncured or partially cured sealant composition to UV radiation, a composition can also comprise a photoinitiator. A photoinitiator absorbs ultraviolet radiation and is transformed into a radical that initiates polymerization. Photoinitiators can be classified in two major groups based upon a mode of action, either or both of which may be used in the compositions described herein. Cleavage-type photoinitiators include acetophenones, α-aminoalkylphenones, benzoin ethers, benzoyl oximes, acylphosphine oxides, bisacylphosphine oxides, and combinations of any of the foregoing. Abstraction-type photoinitiators include benzophenone, Michler's ketone, thioxanthone, anthraquinone, camphorquinone, fluorone, ketocoumarin, and combinations of any of the foregoing.

Examples of suitable photoinitiators include, for example, benzil, benzoin, benzoin methyl ether, benzoin isobutyl ether benzophenol, acetophenone, benzophenone, 4,4'-dichlorobenzophenone, 4,4'-bis(*N,N'*-dimethylamino)benzophenone, diethoxyacetophenone, fluorones, e.g., the H-Nu series of initiators available from Spectra Group Ltd., 2-hydroxy-2-methyl-1-phenylpropan-1-one, 1-hydroxycyclohexyl phenyl ketone, 2-isopropylthixantone, α-aminoalkylphenone, e.g., 2-benzyl-2-dimethylamino-1-(4-morpholinophenyl)-1-butanone, acylphosphine oxides, e.g., 2,6-dimethylbenzoyldiphenyl phosphine oxide, 2,4,6-trimethylbenzoyldiphenylphosphine oxide, bis(2,4,6-trimethylbenzoyl)phenyl phosphine oxide, 2,6-dichlorobenzoyldiphenylphosphine oxide, and 2,6-dimethoxybenzoyldiphenylphosphine oxide, bisacylphosphine oxides, e.g., bis(2,6-dimethyoxybenzoyl)-2,4,4-trimethylpentylphosphine oxide, bis(2,6-dimethylbenzoyl)-2,4,4-trimethylpentylphosphine oxide, bis(2,4,6-trimethylbenzoyl)-2,4,4-trimethylpentylphosphine oxide, and bis(2,6-dichlorobenzoyl)-2,4,4-trimethylpentylphosphine oxide, and combinations of any of the foregoing. A photoinitiator can comprise Irgacure® 2022, i.e., phenylbis(2,4,6-trimethylbenzoyl)-phosphine oxide.

Compositions described herein can comprise 0.01 up to 15 percent by weight of photoinitiator or0.01 up to 10 percent by weight, or 0.01 up to 5 percent by weight of photoinitiator based on the total weight of the composition.

UV curable sealants also include a photoinitiator that is matched to UV radiation source. In general, it can be desirable to use a radiation source having a longer wavelength, such as, for example, from 280 nm to 290 nm to give a better depth of cure. In general, it can be desirable to cure a sealant in less than 30 seconds.

A coating or sealant may include a small amount of a hydroxyl-functional vinyl ether or other low viscosity compound having a terminal hydroxy group, such as a linear hydrocarbon having a terminal hydroxyl group. A hydroxyl-functional vinyl ether can include hydroxybutyl vinyl ether. The amount of reactive diluent in a composition may be from 0 wt% to 3 wt%, from 0.25 wt% to 2 wt%, from 0.5 wt% to 1 wt%, or 0.5 wt%.

Compositions provided by the present disclosure can include a hydroxyl-functional vinyl ether. A hydroxyl-functional vinyl ether can have the structure of Formula (9):

CH₂=CH-O-(CH₂)_{d}-OH (9)

where d is an integer from 0 to 10. The variable d can be an integer from 1 to 4. Examples of suitable hydroxyl-functional vinyl ethers include diethylene glycol monovinyl ether, triethylene glycol monovinyl ether, 1,4-cyclohexane dimethylol monovinyl ether, 1-methyl-3-hydroxypropyl vinyl ether, 4-hydroxybutyl vinyl ether, and a combination of any of the foregoing. A hydroxyl-functional vinyl ether can include 4-hydroxybutyl vinyl ether.

UV curable sealant compositions provided by the present disclosure may also contain an adhesion promoter such as sulfur-containing adhesion promoter. Useful sulfur-containing adhesion promoters are disclosed, for example, in U.S. Patent No. 8,513,339. Such adhesion promoters comprise the reaction product of a sulfur-containing compound such as DMDO and a trifunctionalizing agent such as TAC and having at least some terminal thiol groups and some terminal mercaptosilane groups.

An uncured sealant composition used in the methods of the present disclosure can also comprise an ethylenically unsaturated silane, such as, for example, a sulfur-containing ethylenically unsaturated silane, which has been shown to, in at least some cases, improve the adhesion of a cured sealant formed by the methods of the present disclosure to a metal substrate (to an extent greater than achieved when a conventional adhesion promoter, such as those described below, is used). As used herein, the term "sulfur-containing ethylenically unsaturated silane" refers to a molecular compound that comprises, within the molecule, (i) at least one sulfur (S) atom, (ii) at least one, in some cases at least two, ethylenically unsaturated carbon-carbon bonds, such as a carbon-carbon double bonds (C=C); and (iii) at least one silane group -Si(R¹⁰)₃₋ₓ(-OR¹¹)ₓ, wherein R and R¹ each independently represent an organic group and x is 1, 2, or 3).

A sulfur-containing ethylenically unsaturated silane, which is suitable for use in the uncured sealant compositions used in the methods of the present disclosure, itself can comprise the reaction product of reactants comprising: (i) a mercaptosilane, and (ii) an alkenyl-terminated compound. As used herein, the term "mercaptosilane" refers to a molecular compound that comprises, within the molecule, (i) at least one mercapto (-SH) group, and (ii) at least one silane group (defined above). Suitable mercaptosilanes include, for example, those having a structure according to Formula (9):

HS-R¹²-Si(R¹⁰)ₘ(-OR¹¹)₃₋ₘ (9)

wherein (i) R¹² is a divalent organic group; (ii) R¹¹ is hydrogen or an alkyl group; (iii) R¹⁰ is hydrogen or an alkyl group; and (iv) m is selected from 0, 1, and 2.

Examples of mercaptosilanes suitable for use in preparing the sulfur-containing ethylenically unsaturated silanes suitable for use in the present disclosure, include, γ-mercaptopropyltrimethoxysilane, γ-mercaptopropyltriethoxysilane, γ-mercaptopropylmethyldimethoxysilane, γ-mercaptopropylmethyldiethoxysilane, mercaptomethyltrimethoxysilane, mercaptomethyltriethoxysilane, and combinations of any of the foregoing.

An alkenyl-terminated compound used to prepare a sulfur-containing ethylenically unsaturated silanes suitable for use in the present disclosure can comprise a compound having three terminal alkenyl groups, such as is the case with the triallyl compounds mentioned above.

The examples illustrate suitable methods for producing the sulfur-containing ethylenically unsaturated silanes suitable for use in the present disclosure. An alkenyl-terminated compound can comprise a compound having three terminal alkenyl groups, such as one or more of the foregoing triallyl compounds, and the mercaptosilane and compound having three terminal alkenyl groups can be reacted together in relative amounts such that the resulting reaction product theoretically comprises an average of at least two ethylenically unsaturated groups per molecule.

Compositions provided by the present disclosure can comprise an ethylenically unsaturated silane, such as, for example, a sulfur-containing ethylenically unsaturated silane, which can improve the adhesion of a cured sealant to a metal substrate. As used herein, the term sulfur-containing ethylenically unsaturated silane refers to a molecular compound that comprises, within the molecule, (i) at least one sulfur (S) atom, (ii) at least one, in some cases at least two, ethylenically unsaturated carbon-carbon bonds, such as a carbon-carbon double bonds (C=C); and (iii) at least one silane group, -Si(-R¹⁰)ₘ(-OR¹¹)₃₋ₘ, where each R is independently selected from hydrogen, alkyl, cycloalkyl, aryl, and others, and m is selected from 0, 1, and 2. Examples of ethylenically unsaturated silanes are disclosed in U.S. Application Publication No. 2012/0040104.

Compositions provided by the present disclosure can comprise one or more than one adhesion promoter. A one or more additional adhesion promoter may be present in amount from 0.1 wt% to 15 wt% of a composition, less than 5 wt%, less than 2 wt%, or less than 1 wt%, based on the total dry weight of the composition. Examples of adhesion promoters include phenolics, such as Methylon® phenolic resin, and organosilanes, such as epoxy, mercapto or amino functional silanes, such as Silquest® A-187 and Silquest® A-1100. Other useful adhesion promoters are known in the art. An adhesion promoter can include T-1601, available from PRC-DeSoto International.

Compositions provided by the present disclosure may comprise one or more additional components suitable for use in aerospace sealants and the selection depends at least in part on the desired performance characteristics of the cured sealant under conditions of use.

Fillers useful in compositions described herein include those commonly used in the art, including conventional inorganic fillers, such as fumed silica, calcium carbonate (CaCO₃), and carbon black, as well as lightweight fillers. Fillers that are substantially transparent to ultraviolet radiation, such as fumed silica, may be particularly useful in some embodiments. Suitable lightweight fillers include, for example, those described in U.S. Patent No. 6,525,168 at col. 4, lines 23-55 and those described in U.S. Application Publication No. 2010/0041839 A1 at paragraphs [0016] to [0052].

Other useful fillers include micronized silica gel, talc, and titanium dioxide. For applications in which it is desirable that the cured sealant is clear to enable, for example, visual inspection such as a clear seal cap, the amount of filler can be from 1 wt% to 30 wt. A clear seal cap can comprise, for example, 1.5 wt% filler. Higher filler content can be useful in applications such as surface smoothing in which it is desirable to abrade or sand the cured sealant. The choice of filler is at least in part determined by the index of refraction of the filler. It is desirable that the filler not block UV radiation, and that the filler transmit and/or internally scatter reflected UV radiation.

Compositions provided by the present disclosure may comprise one or more different types of filler. Suitable fillers include inorganic fillers, such as carbon black and calcium carbonate (CaCO₃), silica, polymer powders, and lightweight fillers. Suitable lightweight fillers include, for example, those described in U.S. Patent No. 6,525,168. A composition can include 5 wt% to 60 wt% of the filler or combination of fillers, 10 wt% to 50 wt%, or from 20 wt% to 40 wt%, based on the total dry weight of the composition. Compositions provided by the present disclosure may further include one or more colorants, thixotropic agents, accelerators, fire retardants, adhesion promoters, solvents, masking agents, or a combination of any of the foregoing. As can be appreciated, fillers and additives employed in a composition may be selected so as to be compatible with each other as well as the polymeric component, curing agent, and or catalyst.

Compositions provided by the present disclosure can include low density filler particles. As used herein, low density, when used with reference to such particles means that the particles have a specific gravity of no more than 0.7, or no more than 0.25, or no more than 0.1. Suitable lightweight filler particles often fall within two categories - microspheres and amorphous particles. The specific gravity of microspheres may range from 0.1 to 0.7 and include, for example, polystyrene foam, microspheres of polyacrylates and polyolefins, and silica microspheres having particle sizes ranging from 5 microns to 100 microns and a specific gravity of 0.25 (Eccospheres®). Other examples include alumina/silica microspheres having particle sizes in the range of 5 microns to 300 microns and a specific gravity of 0.7 (Fillite®), aluminum silicate microspheres having a specific gravity of from 0.45 to 0.7 (Z-Light®), calcium carbonate-coated polyvinylidene copolymer microspheres having a specific gravity of 0.13 (Dualite® 6001AE), and calcium carbonate coated acrylonitrile copolymer microspheres such as Dualite® E135, having an average particle size of 40 µm and a density of 0.135 g/cc (Henkel). Suitable fillers for decreasing the specific gravity of the composition include, for example, hollow microspheres such as Expancel® microspheres (available from AkzoNobel) or Dualite® low density polymer microspheres (available from Henkel). Compositions provided by the present disclosure can include lightweight filler particles comprising an exterior surface coated with a thin coating, such as those described in U.S. Publication No. 2010/0041839.

A low density filler can comprise less than 2 wt% of a composition, less than 1.5 wt%, less than 1.0 wt%, less than 0.8 wt%, less than 0.75 wt%, less than 0.7 wt% or less than 0.5 wt% of a composition, where wt% is based on the total dry solids weight of the composition.

Compositions provided by the present disclosure can comprise at least one filler that is effective in reducing the specific gravity of the composition. The specific gravity of a composition can be from 0.8 to 1, from 0.7 to 0.9, from 0.75 to 0.85, or 0.8. The specific gravity of a composition can be less than 0.9, less than 0.8, less than 0.75, less than 0.7, less than 0.65, less than 0.6, or less than 0.55.

A composition may also include any number of additives as desired. Examples of suitable additives include plasticizers, pigments, surfactants, adhesion promoters, thixotropic agents, fire retardants, masking agents, and accelerators (such as amines, including 1,4-diazabicyclo[2.2.2] octane, DABCO®), and combinations of any of the foregoing. When used, the additives may be present in a composition in an amount ranging, for example, from 0 wt% to 60 wt%. An additive may be present in a composition in an amount ranging from 25 wt% to 60 wt%.

Compositions provided by the present disclosure can include a photoactive filler. As used herein, the term "photoactive filler" refers to a filler that comprises a material that is photo-excitable upon exposure to, and absorption of, ultraviolet and/or visible radiation. A photoactive material is a material that, when exposed to light having higher energy than the energy gap between the conduction band and the valence band of the crystal, causes excitation of electrons in the valence band to produce a conduction electron thereby leaving a hole behind on the particular valence band. Examples of photoactive fillers suitable for use in compositions described herein include metal oxides, such as, for example, zinc oxide, tin oxide, ferric oxide, dibismuth trioxide, tungsten trioxide, titanium dioxide (including the brookite, anatase, and/or rutile crystalline forms of titanium dioxide), and mixtures thereof.

A composition can include 1 weight percent to 60 weight percent of the filler or combination of fillers, such as 10 weight percent to 50 weight percent, based on the total weight of the composition, so long as the presence of such fillers in such amounts does not cause a significant detrimental effect on the performance of the composition.

A composition can include an amount of filler sufficient to enable the cured sealant to be abraded such as by sanding. Sanding the cured sealant may be useful in applications in which the sealant is used to smooth surface defects such as depressions, dents, or gaps. Sanding the cured sealant can be useful to smooth the cured sealant to match the contour of the surface to which the sealant was applied. This can be particularly important in applications in which it is desirable to have an aerodynamically smooth surface.

In addition to the foregoing constituents, a composition of the disclosure can optionally include one or more of the following: thixotropes, conventional adhesion promoters, retardants, solvents and masking agents, among other components. However, in selecting the components, the components in combination can be selected to enable visual inspection through the cured sealant and UV curing to an appropriate depth, in addition to enabling the cured sealant to meet aerospace sealant requirements.

Thixotropes, for example silica, are often used in an amount from 0.1 to 5 weight percent, based on the total weight of the composition.

Retardants, such as stearic acid, likewise often are used in an amount from 0.1 to 5 weight percent, based on the total weight of the composition. Conventional adhesion promoters, if employed, are often present in amount from 0.1 to 15 weight percent, based on the total weight of the composition. Suitable such adhesion promoters include phenolics, such as Methylon® phenolic resin available from Occidental Chemicals, and organosilanes, such as epoxy, mercapto or amino functional silanes, such as Silquest® A-187, Silquest® A-1100, Silquest® A-1102 available from Momentive Performance Materials. Masking agents, such as pine fragrance or other scents, which are useful in covering any low level odor of the composition, are often present in an amount from 0.1 to 1 weight percent, based on the total weight of the composition.

A composition provided by the present disclosure can comprise a plasticizer such as a reactive diluent, which, in at least some cases, may allow the composition to include polymers which have a higher T_{g} than would ordinarily be useful in an aerospace sealant. That is, use of a plasticizer may effectively reduce the Tg of the composition, and thus increase the low-temperature flexibility of the cured composition beyond that which would be expected on the basis of the T_{g} of the polymer alone. Plasticizers that are useful in compositions of the present disclosure can include, for example, a linear hydrocarbon. The plasticizer or combination of plasticizers may comprise 1 to 40 weight percent, such as 1 to 10 weight percent of the composition. Depending on the nature and amount of the plasticizer(s) used in the composition, polymers of the disclosure which have T_{g} values up to - 50°C, such as up to -55°C, can be used.

A composition can further comprise one or more organic solvents, such as isopropyl alcohol, in an amount ranging from, for example, 0 to 15 percent by weight on a basis of total weight of the composition, such as less than 15 weight percent and, in some cases, less than 10 weight percent. However, the compositions of the present disclosure can be substantially free or, in some cases, completely free, of any solvent, such as an organic solvent or an aqueous solvent, i.e., water. Stated differentlya composition of the present disclosure can be substantially 100% solids.

Compositions provided by the present disclosure may include an additional thiol-terminated sulfur-containing prepolymer such as, for example, a thiol-terminated polysulfide and/or a thiol-terminated sulfur-containing polyformal.

Partially reacted organo-functional alkoxysilane compositions provided by the present disclosure can be used as an adhesion-promoting primer. The compositions can also improve the corrosion resistance of a surface.

Partially reacted organo-functional alkoxysilane compositions can be provided as a solution. A solution can comprise alcohol and water. A solvent can be selected such that when the composition is applied to a surface, the thin film dries at room temperature within less than 15 minutes, within less than 30 minutes, within less than 45 minutes, or within less than 60 minutes.

To apply the adhesion-promoting primer, a surface can first be cleaned by any appropriate method. For example, the surface can be solvent wiped using a cotton gauze and solvent L628 (available from PRC-DeSoto International Inc.) or any other appropriate substrate cleaning solvent.

A dried film thickness can be less than 500 nm, less than 250 nm, or less than 100 nm. A dried film thickness can be from 1 nm to 500 nm, from 1 nm to 300 nm, from 1 nm to 250 nm, or from 50 nm to 250 nm.

The surface can be a metal surface, a polymer surface, a coating, or other suitable surface. Examples of suitable surfaces include stainless steel AMS 5513, sulfuric acid anodized aluminum AMS 2471, titanium composition C AMS 4911, Alclad 2024 T3 aluminum QQA 250/5, CA8000 polyurethane, abraded CA8000 polyurethane, PR205 epoxy primer, aluminum QQA 250/12, aluminum QQA 250/13, AMS-C-27725 primer, MIL-PRF-23377 epoxy primer, and Alodine® 1200. These surfaces represent surfaces encountered in the aerospace industry.

Compositions provided by the present disclosure may be used, for example, as primer coatings between a substrate and an overlying curable polymeric composition such as a sealant, coating, encapsulant, or potting composition. A sealant includes a composition capable of producing a film that has the ability to resist operational conditions, such as moisture and temperature, and at least partially block the transmission of materials, such as water, fuel, and other liquid and gases. A coating composition includes a covering that is applied to the surface of a substrate to, for example, improve the properties of the substrate such as the appearance, adhesion, wettability, corrosion resistance, wear resistance, fuel resistance, and/or abrasion resistance. A sealant can be used to seal surfaces, smooth surfaces, fill gaps, seal joints, seal apertures, and other features. A potting composition includes a material useful in an electronic assembly to provide resistance to shock and vibration and to exclude moisture and corrosive agents. Sealant compositions provided by the present disclosure can be useful, e.g., as aerospace sealants and as linings for fuel tanks.

Compositions containing thiol-terminated polythioether prepolymers, epoxy curing agents, and latent amine catalysts can be formulated as sealants.

Compositions, such as sealants, may be provided as multi-pack compositions, such as two-pack compositions, wherein one package comprises one or more thiol-terminated polythioether prepolymers and one or more latent amine catalysts and a second package comprises one or more epoxy curing agents. Additives and/or other materials may be added to either package as desired or necessary. The two packages may be combined and mixed prior to use. The pot life of the one or more mixed thiol-terminated polythioethers and epoxies can be at least 48 hours, at least 72 hours, at least 96 hours, or at least 120 hours, where pot life refers to the period of time the mixed composition remains workable following mixing. As used herein, pot life also refers to the working time of a composition. As illustrated in Table 3, the useful working time can be defined as the point during curing at which there is slight gelling but the sealant is still movable and spreadable. The pot life can be from 25 hours to 100 hours, from 30 hours to 90 hours, or from 40 hours to 80 hours. A composition provided by the present disclosure can cure to a tack free surface at room temperature within from 50 hours to 200 hours, from 75 hours to 175 hours, or from 100 hours to 200 hours. A composition provided by the present disclosure can cure to a Shore A hardness of 20A at room temperature within from 50 hours to 200 hours, from 75 hours to 175 hours, or from 100 hours to 200 hours.

A sealant composition can contain from 30% to 70 wt% of a thiol-terminated polythioether prepolymer, from 35 wt% to 65 wt%, from 40 wt% to 60 wt% or from 45 wt% to 55 wt% of a thiol-terminated polythioether prepolymer. A sealant composition contains from 2 wt% to 12 wt% of an epoxy curing agent, from 3 wt% to 11 wt%, from 4 wt% to 10 wt%, or from 5 wt% to 9 wt% of an epoxy curing agent. A sealant composition can contain from 0.2 wt% to 6 wt% of a latent amine catalyst, from 0.3 wt% to 5 wt%, from 0.4 wt% to 4 wt%, and or from 0.5 wt% to 3 wt% of a latent amine catalyst. In each of these compositions, wt% refers to the weight with respect to the total weight of the composition.

Compositions, including sealants, provided by the present disclosure may be applied to any of a variety of substrates. Examples of substrates to which a composition may be applied include metals such as titanium, stainless steel, and aluminum, any of which may be anodized, primed, organic-coated or chromate-coated; epoxy; urethane; graphite; fiberglass composite; Kevlar®; acrylics; and polycarbonates. Compositions provided by the present disclosure may be applied to a coating on a substrate, such as a polyurethane coating.

Compositions provided by the present disclosure may be applied directly onto the surface of a substrate or over an underlayer by any suitable coating process.

Furthermore, methods are provided for sealing an aperture utilizing a composition provided by the present disclosure. These methods comprise, for example, applying a composition provided by the present disclosure to a surface to seal an aperture, and curing the composition. A method for sealing an aperture can comprise applying a sealant composition provided by the present disclosure to surfaces defining an aperture and curing the sealant, to provide a sealed aperture.

A composition may be cured under ambient conditions, where ambient conditions refers to a temperature from 20°C to 25 °C, and atmospheric humidity. A composition may be cured under conditions encompassing a temperature from a 0°C to 100°C and humidity from 0% relative humidity to 100% relative humidity. A composition may be cured at a higher temperature such as at least 30°C, at least 40°C, or at least 50°C. A composition may be cured at room temperature, e.g., 25°C.

When cured at room temperature a sealant provided by the present disclosure can cure to a tack free surface within 50 hours to 200 hours after the sealant components are mixed, within 50 hours to 150 hours, within 50 hours to 150 hours, or within 100 hours to 200 hours.

When cured at room temperature a sealant provided by the present disclosure can cure to a hardness of at least Shore A 20 within 50 hours to 250 hours after the sealant components are mixed, within 50 hours to 200 hours, within 50 hours to 150 hours, or within 100 hours to 200 hours.

Compositions provided by the present disclosure can cure rapidly at the end of the working time. For example, a sealant can cure, at room temperature, to a tack free surface within 24 hours after the time the sealant is no longer workable (end of working time), within 36 hours, or within 48 hours. A sealant can cure, at room temperature, to a Shore A hardness of 20A within 24 hours after the time the sealant is no longer workable (end of working time), within 36 hours, or within 48 hours.

The time to form a viable seal using curable compositions of the present disclosure can depend on several factors as can be appreciated by those skilled in the art, and as defined by the requirements of applicable standards and specifications. In general, curable compositions of the present disclosure can develop adhesion strength within 24 hours to 30 hours, and 90% of full adhesion strength develops from 2 days to 3 days, following mixing and application to a surface. In general, full adhesion strength as well as other properties of cured compositions of the present disclosure can become fully developed within 7 days following mixing and application of a curable composition to a surface.

Sealants provided by the present disclosure can be used to seal surface on aviation and aerospace vehicles. The sealants may be used to seal apertures such as apertures associated with fuel tanks. To seal an aperture a sealant may be applied to a surface or one or more surfaces defining an aperture and the sealant allowed to cure to seal the aperture.

Compositions of the present disclosure can have a T_{g} when cured not higher than -55°C, such as not higher than -60°C, or, in some cases, not higher than -65°C. As described above, the methods of the present disclosure comprise exposing the uncured sealant composition described above to actinic radiation to provide a cured sealant. The examples herein describe suitable conditions for performing this method step. In some embodiments of the present disclosure, the thiol-ene reaction, which forms the cured sealant, is effected by irradiating an uncured composition comprising: (a) a thiol-terminated polythioether (such as any of those described above); and (b) an alkenyl-terminated compound, with actinic radiation. As used herein, "actinic radiation" encompasses electron beam (EB) radiation, ultraviolet (UV) radiation, and visible light. In many cases, the thiol-ene reaction is effected by irradiating the composition with UV light and, in such cases, as disclosed herein, the composition often further comprises a photoinitiator, among other optional ingredients.

Ultraviolet radiation from any suitable source which emits ultraviolet light having a wavelength ranging from, for example, 180 nanometers to 400 nanometers, may be employed to initiate the thiol-ene reaction described above and thereby form the cured sealant. Suitable sources of ultraviolet light are generally known and include, for example, mercury arcs, carbon arcs, low pressure mercury lamps, medium pressure mercury lamps, high pressure mercury lamps, swirl-flow plasma arcs and ultraviolet light emitting diodes. Certain embodiments of the compositions of the disclosure can exhibit an excellent degree of cure in air at relatively low energy exposure in ultraviolet light.

UV cure of the compositions of the present disclosure to depths of up to 2 inches or more can be achieved in some cases. This means that cured sealants having a thickness of 2 inches or more, and having desirable sealant properties described herein, can be achieved by exposure of the compositions described herein to actinic radiation, such as ultraviolet radiation, in air at relatively low energy exposure.

A UV light source can have an emission peak in the range of 250 nm to 400 nm and at any wavelength or combination of wavelengths in between 250 nm and 400 nm. For example, useful UV sources include mercury vapor (250 nm to 400 nm; 600 mW/cm²) and Phoseon Firefly™ (395 nm; >1000 mW/cm² setting).

Compositions can include sealant, coating, and/or electrical potting compositions. As used herein, the term "sealant composition" refers to a composition that is capable of producing a film that has the ability to resist atmospheric conditions, such as moisture and temperature and at least partially block the transmission of materials, such as water, fuel, and other liquid and gasses. A sealant composition of the present disclosure can be useful, e.g., as aerospace sealants and linings for fuel tanks.

Sealants produced according to the methods of the present disclosure can be fuel-resistant. As used herein, the term "fuel resistant" means that a sealant has a percent volume swell of not greater than 40%, in some cases not greater than 25%, in some cases not greater than 20%, in yet other cases not more than 10%, after immersion for one week at 140°F (60°C) and ambient pressure in jet reference fluid (JRF) Type I according to methods similar to those described in ASTM D792 or AMS 3269. Jet reference fluid JRF Type I, as employed herein for determination of fuel resistance, has the following composition (see AMS 2629, issued July 1, 1989), § 3.1.1 et seq., available from SAE (Society of Automotive Engineers, Warrendale, PA).

Sealants produced according to the present disclosure can have an elongation of at least 100% and a tensile strength of at least 250 psi when measured in accordance with the procedure described in AMS 3279, § 3.3.17.1, test procedure AS5127/1, § 7.7.

Sealants produced according to the present disclosure can have a tear strength of at least 25 pounds per linear inch (pli) or more when measured according to ASTM D624 Die C.

UV-curable compositions provided by the present disclosure may be used in preformed seal caps, which are used to seal fasteners such as those used in aircraft fuel tanks. When placed over a fastener and cured, the preformed seal caps allow visual inspection of the seal between the fastener and the cured composition. Methods for making premixed and frozen seal caps using polythioether polymer compositions are disclosed in U.S. Patent No. 7,438,974, U.S. Application Publication No. 2013/0284359, U.S. Application Publication No. 2012/0040104, U.S. Application Publication No. 2012/0040103, and U.S. Application Publication No. 2015/0086726. Methods similar to those disclosed in U.S. Patent No. 7,438,974, can be used to prepare and use the UV curable seal caps provided by the present disclosure.

A preformed seal cap comprises a preformed shell comprising a sealant composition that is at least partially cured and that defines a cavity. The cavity is filled with an at least partially uncured quantity of a sealant composition. The composition forming the preformed shell may be any suitable sealant composition that is visually clear and that is transmissive to UV radiation. The composition forming the preformed shell can comprise a UV-curable composition provided by the present disclosure. The composition is at least partially cured sufficient to maintain the integrity of the shell to facilitate handling. In such embodiments, the composition forming the preformed shell may be cured following assembly of the preformed seal cap on a fastener either by the same or other curing mechanism as the composition filling the cavity. The composition forming the preformed shell can be fully cured before the cavity is filled.

The preformed shell may be prepared, for example, by injection molding, compression molding, or other appropriate method. The shell may be any suitable thickness sufficient to retain a sealant composition within the cavity and to facilitate handling and assembly. The shell can have a thickness of 1/32 inches, 1/16 inches, 1/8 inches, or ¼ inches. The dimensions of a preformed shell depend at least in part on the dimensions of the fastener intended to be sealed, such that the preformed seal cap completely covers the fastener and provides a surface for adhesion to a substrate to which the fastener is attached.

Similarly, a preformed shell may have any appropriate shape sufficient to cover a fastener and to provide a seal to a substrate to which the fastener is attached. For example, a preformed shell may comprise a first part intended to fit over a fastener and defining an internal cavity in the shaped of a dome or a tube capped by a dome. A preformed shell may include a second part, opposite the dome or cap, with a flared section that can taper to a section configured to conform to a substrate, and that is intended to mount to a substrate. This section also defines the opening to the cavity. The substrate on which the fastener is mounted may be flat or may be other shapes such as curved or arced. In such cases, the flared section of the preformed shell may be configured to have the same shape or similar shape to that of the substrate to which the preformed seal cap is to be mounted.

A method for making a sealant can comprise (1) forming a first sealant composition into a preformed shape comprising a cavity; (2) at least partially curing the first sealant; (3) filling the cavity with a second sealant composition; and (4) maintaining the second sealant composition at least partially uncured. The first sealant composition and the second sealant composition can be visually clear; and the first sealant composition and the second sealant composition comprise: (i) a thiol-terminated polythioether; and (ii) an alkenyl-terminated compound, such as an alkenyl-terminated compound comprising a polyvinyl ether and/or a polyallyl compound. The methods further comprise maintaining the second sealant composition at least partially uncured.

Maintaining the second sealant composition at least partially uncured can comprise shielding the second sealant composition from ultraviolet radiation.

Forming the first sealant composition can comprise compressing the first sealant composition to a predetermined thickness.

Forming the first sealant composition can comprise forming the first sealant composition into a concave shell having an internal cavity; and filling the cavity comprises filling the internal cavity with the second sealant.

The viscosity of the uncured second sealant filling the cavity can be such that it will not readily flow out of the cavity during use, for example, when the seal cap is inverted and placed on a fastener. The viscosity is also such that the uncured sealant conforms to the fastener during assembly and does not entrap air pockets or bubbles. When placed on a fastener, a seal cap may be slowly lowered over and onto a fastener and gently rotated to distribute the uncured sealant onto the surface of the fastener and gradually completely over a seal cap so as to avoid entrapment of air pockets. The viscosity of the uncured second sealant can be from 5,000 poise to 15,000 poise, from 7,500 poise to 12,500 poise, or 10,000 poise.

After fabrication and at least partial or full curing to a preformed shell, the preformed shell is filled with an uncured second sealant composition. The uncured second sealant composition comprises a UV-curable composition provided by the present disclosure. The composition forming the preformed shell and filling the cavity may both be a UV-curable composition provided by the present disclosure, or may be the same composition. The composition filling the cavity may be partially cured or may be uncured.

Prior to use, such as during storage and shipment, a preformed seal cap comprising the shell and cavity filled with the at least partially uncured sealant may be stored under conditions protected from UV radiation to prevent curing of at least the composition filling the cavity. In embodiments in which the preformed shell is fully cured or comprises a UV-curable composition, the temperature a humidity conditions of the storage and transportation environment do not, in general, affect the curing to of the compositions.

Prior to assembly, the preformed seal caps can be removed from the UV-protection. To seal a fastener, a preformed seal cap is placed over the fastener, placed or pressed onto the substrate surface, and exposed to UV radiation to cure the composition filling the cavity. Prior to applying the preformed seal cap over the fastener, the fastener may be wiped clean with a solvent and a partially reacted alkoxysilane primer composition provided by the present disclosure applied to the fastener and allowed to dry. Also, prior to curing, the interface between the fastener and the sealant composition and between the substrate and the sealant composition may be visually inspected to ensure that the interface between the fastener, the substrate, and the sealant composition are free of voids, pockets, and/or separations. If such voids, pockets, and/or separations are observed, the preformed seal cap may be repositioned such that the defects are removed, or may be detached, and a new preformed seal cap mounted on the fastener.

UV curable sealants provided by the present disclosure may be used to fill and planarize surface defects such as depressions, dents, joints, and gaps. Aircraft surface may contain thousands of fasteners, and many joints and panel gaps. For example, fasteners that attach outer panels of aircraft are often countersunk and attached to conductive inner surfaces. It is desirable that the countersink depressions be planarized to improve the aerodynamics of the structure and also be electrically insulated. In addition, there can be joints between assemblies and gaps between adjacent panels that are desirable to fill to improve surface aerodynamics and to electrically insulate. These and other objectives can be accomplished by using the UV-curable sealants disclosed herein.

Surface depressions on an aerospace substrate, resulting, for example, from countersunk fasteners or dents, can be filled by applying a UV-curable sealant provided by the present disclosure and exposing the applied sealant to UV radiation to cure the sealant. Prior to applying the sealant over the fastener, the fastener may be wiped clean with a solvent and a partially reacted alkoxysilane primer composition provided by the present disclosure applied to the fastener and allowed to dry. The sealant may be applied to the depression with an applicator such as a syringe, cartridge, extruder, or spatula in an amount sufficient to fill the depression and smoothed. The applied sealant may be smoothed, for example, by smearing or by applying a plate on top of the sealant. The plate may be transparent to UV radiation, such as a glass plate or a plastic sheet such as a polyethylene sheet, thereby enabling pressure to be applied to the sealant during curing. The applied sealant can then be exposed to UV radiation to cure the sealant. If used, the UV-transmissive pressure plate may then be removed to provide an aerodynamically smooth surface. In certain methods, it may be necessary to remove excess sealant or otherwise smooth the interface between the edge of the cured sealant and the aircraft substrate. This may be accomplished, for example, by sanding the surface using, for example, an abrasive paper, such as 400 wet/dry sand paper.

Similar methods may be used to fill gaps between panels or other surface features.

Such methods may be used during aircraft assembly or during repair and replacement operations. In general, the aircraft surface including the cured UV-curable sealant is painted prior to use.

For aerospace sealant applications it can be desirable that a sealant including a multilayer sealant including a partially reacted alkoxysilane primer and overlying thiol-ene based sealant meet the requirements of Mil-S-22473E (Sealant Grade C) at a cured thickness of 20 mils, exhibit an elongation greater than 200%, a tensile strength greater than 250 psi, and excellent fuel resistance, and maintain these properties over a wide temperature range from -67 °F to 360 °F. In general, the visual appearance of the sealant is not an important attribute. Prior to cure, it is desirable that the mixed components have a useful working time or pot life of at least 24 hours and have a tack free cure time at room temperature within 24 hours of the pot life. Useful working time or pot life refers to the time period the composition remains workable for application at ambient temperatures after the catalyst is released.

Cured compositions disclosed herein, such as cured sealants, exhibit properties acceptable for use in aerospace applications. In general, it is desirable that sealants used in aviation and aerospace applications exhibit the following properties: peel strength greater than 20 pounds per linear inch (pli) on Aerospace Material Specification (AMS) 3265B substrates determined under dry conditions, following immersion in JRF Type I for 7 days, and following immersion in a solution of 3% NaCl according to AMS 3265B test specifications; tensile strength between 300 pounds per square inch (psi) and 400 psi; tear strength greater than 50 pounds per linear inch (pli); elongation between 250% and 300%; and hardness greater than 40 Durometer A. These and other cured sealant properties appropriate for aviation and aerospace applications are disclosed in AMS 3265B. It is also desirable that, when cured, compositions of the present disclosure used in aviation and aircraft applications exhibit a percent volume swell not greater than 25% following immersion for one week at 60 °C (140 °F) and ambient pressure in JRF Type I. Other properties, ranges, and/or thresholds may be appropriate for other sealant applications.

Compositions provided by the present disclosure are fuel-resistant. As used herein, the term "fuel resistant" means that a composition, when applied to a substrate and cured, can provide a cured product, such as a sealant, that exhibits a percent volume swell of not greater than 40%, in some cases not greater than 25%, in some cases not greater than 20%, in yet other cases not more than 10%, after immersion for one week at 140 °F (60 °C) and ambient pressure in Jet Reference Fluid (JRF) Type I according to methods similar to those described in ASTM D792 (American Society for Testing and Materials) or AMS 3269 (Aerospace Material Specification). Jet Reference Fluid JRF Type I, as employed for determination of fuel resistance, has the following composition: toluene: 28% ± 1% by volume; cyclohexane (technical): 34% ± 1% by volume; isooctane: 38% ± 1% by volume; and tertiary dibutyl disulfide: 1% ± 0.005% by volume (see AMS 2629, issued July 1, 1989, § 3.1.1 etc., available from SAE (Society of Automotive Engineers)).

Compositions provided herein can provide a cured product, such as a sealant, exhibiting a tensile elongation of at least 100% and a tensile strength of at least 400 psi when measured in accordance with the procedure described in AMS 3279, § 3.3.17.1, test procedure AS5127/1, § 7.7.

Cured sealants provided by the present disclosure can meet the performance criteria of SAE AS5127/1B, which includes properties such as fuel swell, weight loss, hardness, tensile strength, elongation, peel strength, and lap shear strength. These performance criteria are summarized in Table 14 of the present disclosure.

A cured sealant comprising a composition provided by the present disclosure can meet or exceed the requirements for aerospace sealants as set forth in AMS 3277.

Apertures and surfaces, including apertures and surfaces of aerospace vehicles, sealed with compositions provided by the present disclosure are also disclosed.

### EXAMPLES

Embodiments provided by the present disclosure are further illustrated by reference to the following examples, which describe compositions and sealants provided by the present disclosure. It will be apparent to those skilled in the art that many modifications, both to materials, and to methods, may be practiced without departing from the scope of the disclosure.

### Example 1

### Primer Compositions

Various primer coating compositions were prepared by combining the components (in grams) listed in Table 1, and reacting the mixtures at a temperature (as indicated) of either 70°C or without heating for from 60 minutes to 100 minutes as indicated in Table 1.

**Table 1. Primer Compositions.**

| **Example** | **Functional Group** | **A** | **B** | **C** | **D** | **E** | **F** | **G** |
|---|---|---|---|---|---|---|---|---|
| Amino-functional alkoxysilane* | amino | 15 | 12 | 9 | 8 | 6 | 6 | 8.0 |
| Amino-functional bis(alkoxysilane)** | amino | 0 | 3 | 3 | 0 | 0 | 2 | 0 |
| Organo-functional alkoxysilane | methacrylate*** | 0 | 0 | 1.5 | 0 | 0 | 0 | 0 |
| | alkenyl† | 0 | 0 | 0 | 7 | 9 | 7 | 0 |
| | epoxy‡ | 0 | 0 | 0 | 0 | 0 | 0 | 7.0 |
| Water | | 3.6 | 3.6 | 3.6 | 3.2 | 3.2 | 3.2 | 3.2 |
| Isopropanol | | 81.4 | 81.4 | 81.4 | 81.2 | 81.8 | 81.8 | 81.4 |
| | | | | | | | | |
| Temperature, °C | | 70 | 70 | 70 | 70 | 70 | 70 | Mildly exothermic |
| Time, min | | 60 | 70 | 100 | 100 | 100 | 100 | 30 |

| | | | | | | | | |
|---|---|---|---|---|---|---|---|---|
| * Silquest™ A-1102, 3-aminopropyltriethoxy silane; Momentive Performance Materials Inc. ** SIB 1824.5, bis(3-triethoxysilylpropyl)amine; Gelest Inc. *** Silquest™ A-174-NT, acrylate-functional alkoxysilane, Momentive Performance Materials Inc. † Silquest™ Y-15866, alkenyl-functional alkoxysilane; Momentive Performance Materials Inc. ‡ Silquest™ A-186, β-(3,4-epoxycyclohexyl)ethyltrimethoxysilane; Momentive Performance Materials Inc. | | | | | | | | |

Each of the primer coating compositions had a 15 wt% solids content. The mol% of each alkoxysilane used in the primer coating compositions is shown in Table 2.

**Table 2. Alkoxysilane ratios in the primer compositions.**

| **Primer** | **Alkoxysilane Ratios (mol%)** | | |
|---|---|---|---|
| | Amino-functional alkoxysilane L-112* | Amino-functional bis(alkoxysilane) SIB 1824.5** | Organo-functional alkoxysilane |
| A | 100 | 0 | 0 |
| B | 67 | 33 | 0 |
| C | 60 | 20 | 20*** |
| D | 53 | 0 | 47† |
| E | 47 | 0 | 53† |
| F | 40 | 13 | 47† |
| G | 53 | 0 | 47‡ |

| | | | |
|---|---|---|---|
| * Silquest™ A-1102, 3-aminopropyltriethoxy silane; Momentive Performance Materials Inc. ** SIB 1824.5, bis(3-triethoxysilylpropyl)amine; Gelest Inc. *** Silquest™ A-174-NT, acrylate-functional alkoxysilane, Momentive Performance Materials Inc. † Silquest™ Y-15866, alkenyl-functional alkoxysilane; Momentive Performance Materials Inc. ‡ Silquest™ A-186, β-(3,4-epoxycyclohexyl)ethyltrimethoxysilane; Momentive Performance Materials Inc. | | | |

### Example 2

### Sealant Formulations

The ability of the partially reacted alkoxysilane compositions to serve as adhesive-promoting primers was evaluated using a thiol-ene based sealant formulation. The components of the sealant formulation are listed in Table 3:

**Table 3. Thiol-ene sealant composition.**

| Component | Function | Weight (g) | Weight Percent (wt%) |
|---|---|---|---|
| Permapol® P-3.1(e) | Thiol-terminated polythioether prepolymer | 77.03 | 77.48 |
| Socal® 31 | Precipitated calcium carbonate filler | 0.05 | 0.05 |
| Cab-O-Sil® M5 | Fumed SiO₂ filler | 1.54 | 1.54 |
| Gasil® IJ35 micronized silica gel; APS 5 µm | Synthetic amorphous SiO₂ filler | 16.66 | 16.6 |
| Triallyl cyanurate | Crosslinker (alkenyl) | 1.1 | 1.1 |
| Triethylene glycol divinyl ether | Chain extender (alkenyl) | 3.29 | 3.27 |
| 4-Hydroxybutylvinyl ether | Functional monomer (alkenyl) | 0.49 | 0.48 |
| γ-Mercaptopropyltrimethoxysilane | Adhesion promoter | 0.10 | 0.1 |
| Irgacure® 2022 | photoinitiator | 0.1 | 0.1 |

The sealant composition was prepared by charging a 100 g Hauschild cup with 77.03 g of Permapol® P-3.1(e), 0.05 g of Socal® 31, 1.54 g of Cab-O-Sil® M5, and 16.66 g of Gasil® IJ35. The cup was sealed and placed in a Hauschild high-speed mixer for 90 seconds until all fillers were homogeneously dispersed in the resin. To this was added 1.1 g of triallyl cyanurate (TAC), 3.29 g of triethyleneglycol divinyl ether (TEG-DVE), 0.49 g of hydroxybutyl vinyl ether (HBVE), 0.10 g of γ-mercaptopropyltrimethoxysilane, and 0.10 gram of Irgacure® 2022 at 23°C. The full formulation was then mixed in high-speed mixer for 30 seconds.

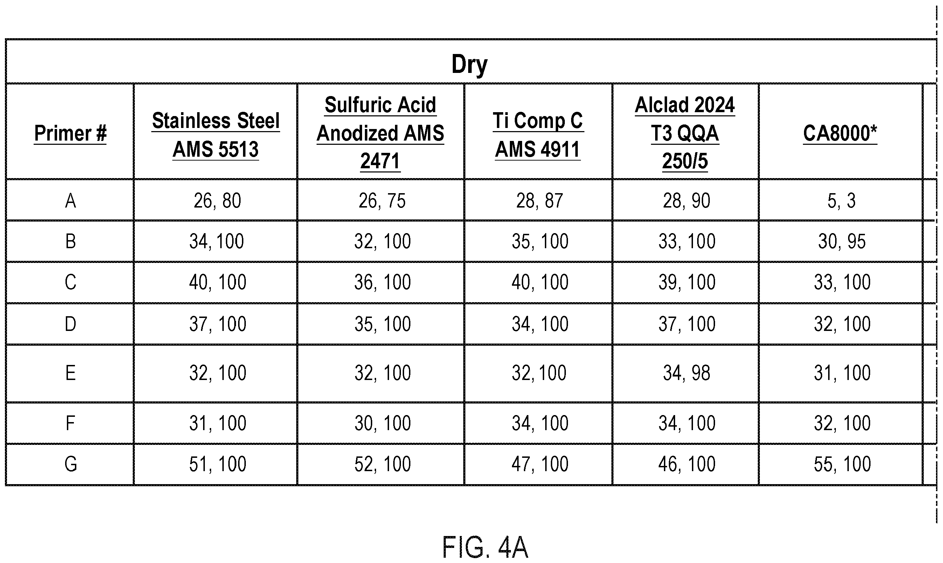

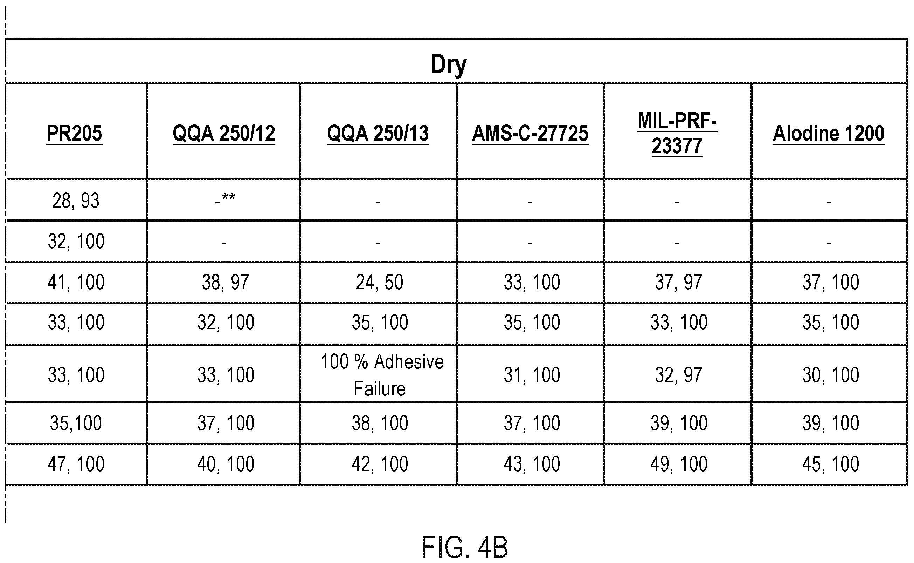

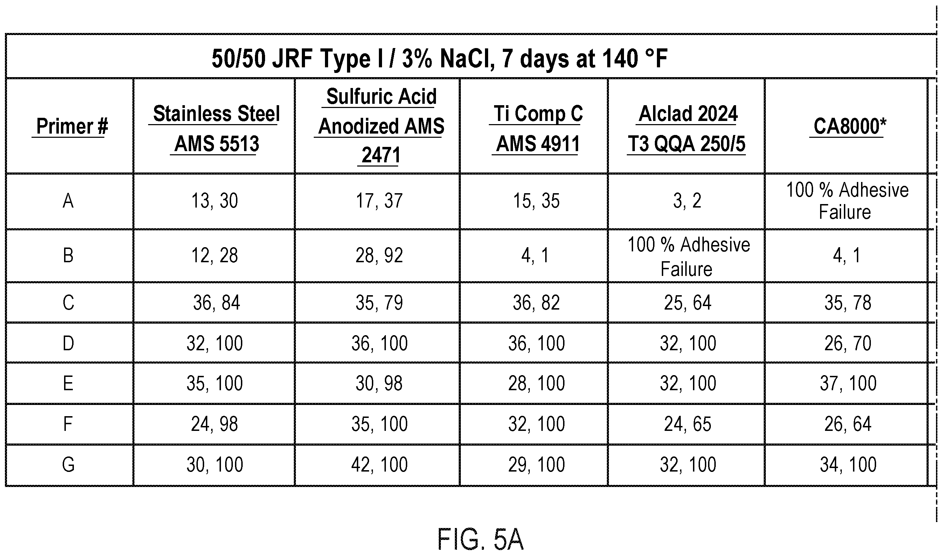

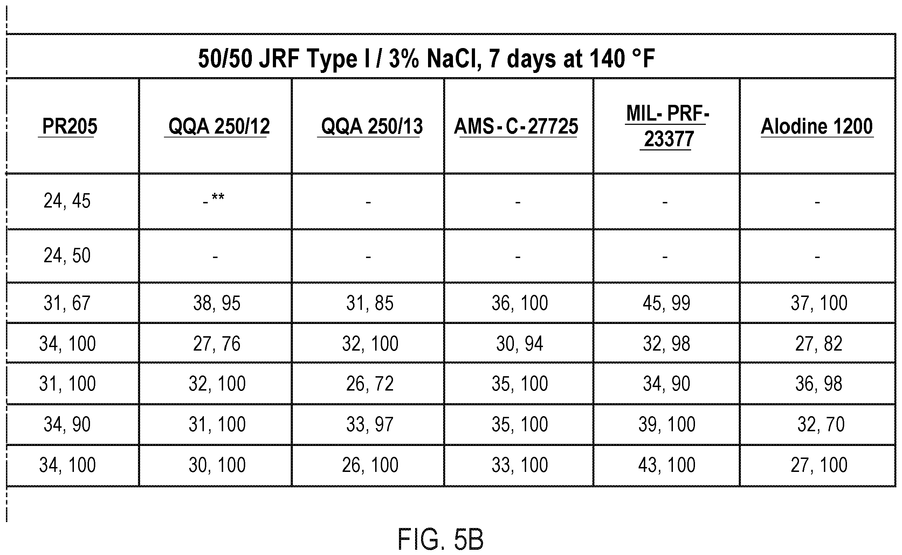

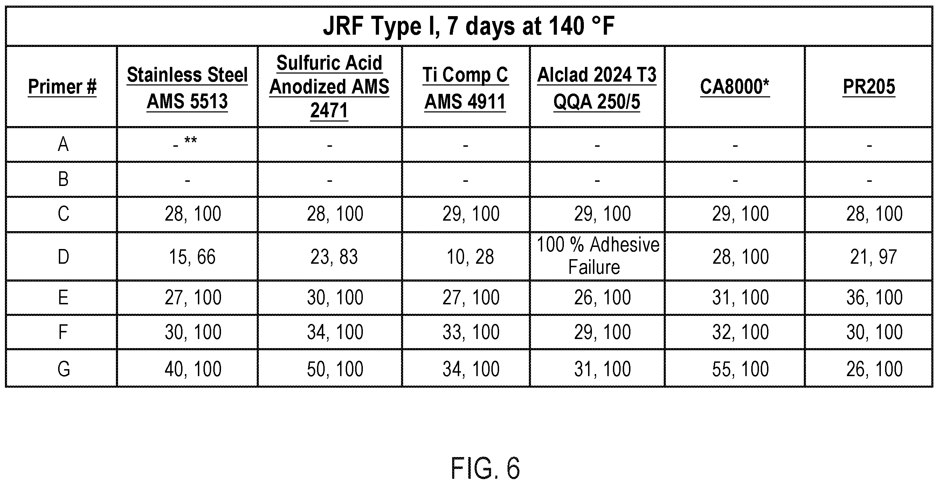

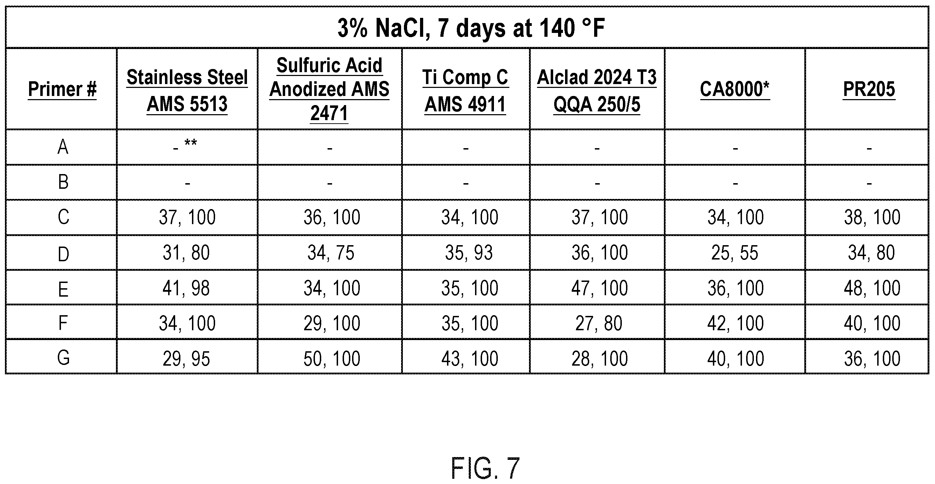

Aerospace surfaces as indicated in FIGS. 4A-7 were flooded with L628 organic solvent (Bonderite® C-AK 4848-257 Turco®; Turco® 4848-257; available from Henkel North America) followed by scrubbing with AMS 3819 Grade A cloth wipes. After scrubbing, the test panels were again flooded with solvent and immediately wiped dry using AMS 3819 Grade A cloth wipes. The clean surface was allowed to dry for 15 minutes at room temperature. A primer coating was then applied to the dry surface by wiping with a cotton gauze saturated with the primer and the primer was allowed to dry for 20 minutes at room temperature to evaporate the isopropanol. The thiol-ene based UV curable sealant was applied to the dried primer coating and cured at room temperature followed by exposure to UV (Phoseon FireFly™ UV LED Curing System; UV-A flux of 36 mW/cm² and UV-V flux of 373 mW/cm²) for from 10 to 60 seconds. The sealant was allowed to fully cure at room temperature

The cured panels were (1) maintained at ambient conditions for a minimum of 24 hours, (2) immersed in 50/50 JRF Type I / 3% NaCl for 7 days at 60°C; (3) immersed in JRF Type I for 7 days at 60°C; or (4) immersed in 3% NaCl for 7 days at 60°C, after which time, adhesion was measured as percent of cohesive failure. The peel strength and %cohesion of the sealant to the cured panels was measured according to AS 5127/1C, pages 38, 39, 41, and 42. An adhesion scale ranging from 0 to 5 was assigned to each test, with a value of 5 being 100% cohesive failure and a value of 0 being 100% adhesive failure. (Note that the adhesion test method is not a standardized test). It is desirable that the multilayer coating including the primer and overlying coating exhibit a high peel strength (%pli) and 100% cohesive failure. The results are presented in FIGS. 4A-7. The CA8000 surface was abraded with Scotch Brite.

## Claims

1. A composition comprising:
partially reacted organo-functional alkoxysilanes comprising the reaction products of reactants comprising:
(i) an amino-functional alkoxysilane;
(ii) an organo-functional alkoxysilane, wherein the organo group is reactive with a thiol group; and
(iii) water; and an alcohol.

2. The composition of claim 1, wherein the organo-functional alkoxysilane is selected
(a) from an epoxy-functional alkoxysilane, an alkenyl-functional alkoxysilane, an acrylate-functional alkoxysilane, a methacrylate-functional alkoxysilane, and a combination of any of the foregoing, preferably the organo-functional alkoxysilane is selected from an alkenyl-functional alkoxysilane and an epoxy-functional silane, preferably epoxy-functional silane is selected from β-(3,4-epoxycyclohexyl)ethyltrimethoxy silane and γ-glycidoxypropyltrimethoxy silane, or
(b) from an organo-functional mono(alkoxysilane), an organo-functional bis(alkoxysilane), an organo-functional tris(alkoxysilane), and a combination of any of the foregoing.

3. The composition of claim 1, wherein the amino-functional alkoxysilane is selected from an amino-functional mono(alkoxysilane), an amino-functional bis(alkoxysilane), and combination thereof, preferably the amino-functional alkoxysilane comprises an amino-functional bis(alkoxysilane).

4. The composition of claim 1, wherein the amino-functional alkoxysilane is selected from an amino-functional mono(alkoxysilane) having the structure of Formula (1), an amino-functional di(alkoxysilane) having the structure of Formula (2), and combination thereof.:
(NH₂-R⁵-)ₙSi(-O-R⁴)₄₋ₙ (1)
(R⁴-O-)₃-Si-(CH₂)ₙ₋NH-(CH₂)ₙ-Si-(-O-R⁴)₃ (2)
wherein,
n is selected from 1, 2, and 3;
each R⁵ is independently selected from C₁₋₆ alkanediyl and a bond; and
each R⁴ is independently selected from C₁₋₃ alkyl.

5. The composition of claim 1, wherein the organo-functional alkoxysilane comprises an organo-functional mono(alkoxysilane) having the structure of Formula (3):
(R⁶-R⁵-)ₙSi(-O-R⁴)₄₋ₙ (3)
wherein,
n is selected from 1, 2, and 3;
each R⁶ is independently selected from -CH=CH₂, -O-C(=O)-CH=CH₂, and -O-C(=O)-C(-CH₃)=CH₂;
each R⁵ is independently selected from C₁₋₆ alkanediyl and a bond; and
each R⁴ is independently selected from C₁₋₃ alkyl.

6. The composition of claim 1, wherein the organo-functional alkoxysilane comprises a methacrylate-functional alkoxysilane, the methacrylate-functional alkoxysilane preferably comprises γ-methacryloxypropyltrimethoxy silane.

7. The composition of claim 6, wherein the composition is prepared by the steps of:
combining the amino-functional alkoxysilane, the organo-functional alkoxysilane, the water and an alcohol; and
heating the mixture to a temperature from 60°C to 85°C for from 40 minutes to 80 minutes to provide the partially reacted organo-functional alkoxysilane.

8. The composition of claim 1, wherein the reactants comprise a molar ratio of water to alkoxy groups from 0.9 to 1.1.

9. The composition of claim 1, wherein the composition comprises from 5 wt% to 25 wt% of the partially reacted organo-functional alkoxysilanes, wherein wt% is based on a total weight of the composition.

10. A method of preparing a partially reacted organo-functional alkoxysilane composition comprising:
combining,
an amino-functional alkoxysilane;
an organo-functional alkoxysilane wherein the organo group is reactive with a thiol group;
an alcohol; and
water, wherein the molar ratio of water to alkoxy groups is from 0.9 to 1.1; and
heating the mixture to a temperature from 60°C to 85°C for from 40 minutes to 80 minutes to provide a composition comprising a partially reacted organo-functional alkoxysilane.

11. A method of preparing a partially reacted epoxy-functional alkoxysilane composition comprising reacting:
an amino-functional alkoxysilane;
an epoxy-functional alkoxysilane;
an alcohol; and
water.

12. A multilayer coating comprising:
a first coating comprising the composition of claim 1; and
a second coating overlying the first coating, wherein the second coating is prepared from a composition comprising reactive thiol groups and reactive alkenyl groups.

13. The multilayer coating of claim 12, wherein the second coating comprises:
a thiol-terminated polythioether prepolymer; and
a polyalkenyl curing agent selected from a polyallyl compound, a polyvinyl ether, and a combination thereof, wherein the polyalkenyl curing agent is **characterized by** an average functionality from 2 to 3.

14. A method of sealing a surface comprising:
providing a surface;
applying the composition of claim 1 to the surface;
drying the composition to provide a dried primer coating;
applying an uncured sealant composition onto the dried primer coating, wherein
the uncured sealant composition comprises reactive thiol groups and reactive alkenyl groups; and
curing the uncured sealant composition to provide a sealed surface.

15. The method of claim 14, wherein,
drying comprises allowing the composition of claim 1 to dry at room temperature for from 10 minutes to 60 minutes; and
curing comprises exposing the uncured sealant composition to UV radiation.

## Patentansprüche

1. Zusammensetzung enthaltend:
partiell umgesetzte organofunktionelle Alkoxysilane, die die Reaktionsprodukte von Reaktanten umfassend
(i) ein aminofunktionelles Alkoxysilan,
(ii) ein organofunktionelles Alkoxysilan, wobei die Organogruppe mit einer Thiolgruppe reaktiv ist, und
(iii) Wasser und einen Alkohol
enthalten.

2. Zusammensetzung nach Anspruch 1, wobei das organofunktionelle Alkoxysilan ausgewählt aus:
(a) einem epoxyfunktionellen Alkoxysilan, einem alkenylfunktionellen Alkoxysilan, einem acrylatfunktionellen Alkoxysilan, einem methacrylatfunktionellem Alkoxysilan und einer Kombination jeglicher der Vorstehenden, vorzugsweise das organofunktionelle Alkoxysilan ausgewählt ist aus einem alkenylfunktionellen Alkoxysilan und einem epoxyfunktionellen Alkoxysilan, vorzugsweise das epoxyfunktionelle Silan ausgewählt ist aus β-(3,4-Epoxycyclohexyl)ethyltrimethoxysilan und γ-Glycidoxypropyltrimethoxysilan, oder
(b) einem organofunktionellen Mono(alkoxysilan), einem organofunktionellen Bis(alkoxysilan), einem organofunktionellen Tris(alkoxysilan) und einer Kombination jeglicher der Vorstehenden.

3. Zusammensetzung nach Anspruch 1, wobei das aminofunktionelle Alkoxysilan ausgewählt ist aus einem aminofunktionellen Mono(alkoxysilan), einem aminofunktionellen Bis(alkoxysilan) und Kombinationen davon, vorzugsweise das aminofunktionelle Alkoxysilan ein aminofunktionelles Bis(alkoxysilan) enthält.

4. Zusammensetzung nach Anspruch 1, wobei das aminofunktionelle Alkoxysilan ausgewählt ist aus einem aminofunktionellen Mono(alkoxysilan) mit der Struktur der Formel (1), einem aminofunktionellen Di(alkoxysilan) mit der Struktur der Formel (2) und Kombinationen davon:
(NH₂-R⁵-)ₙSi(-O-R⁴)₄₋ₙ (1)
(R⁴-O-)₃-Si-(CH₂)ₙ-NH-(CH₂)ₙ-Si-(-O-R⁴)₃ (2),
worin
n ausgewählt ist aus 1, 2 und 3,
jedes R⁵ unabhängig voneinander ausgewählt ist aus C₁₋₆-Alkandiyl und einer Bindung und
jedes R⁴ unabhängig voneinander ausgewählt ist aus C₁₋₃-Alkyl.

5. Zusammensetzung nach Anspruch 1, wobei das organofunktionelle Alkoxysilan ein organofunktionelles Mono(alkoxysilan) mit der Struktur der Formel (3) enthält:
(R⁶-R⁵-)ₙSi(-O-R⁴)₄₋ₙ (3),
worin
n ausgewählt ist aus 1, 2 und 3,
jedes R⁶ unabhängig voneinander ausgewählt ist aus -CH=CH₂, -O-C(=O)-CH=CH₂ und -O-C(=O)-C(-CH₃)=CH₂;
jedes R⁵ unabhängig voneinander ausgewählt ist aus C₁₋₆-Alkandiyl und einer Bindung, und
jedes R⁴ unabhängig voneinander ausgewählt ist aus C₁₋₃-Alkyl.

6. Zusammensetzung nach Anspruch 1, wobei das organofunktionelle Alkoxysilan ein methacrylatfunktionelles Alkoxysilan enthält, wobei das methacrylatfunktionelle Alkoxysilan vorzugweise γ-Methacryloxypropyltrimethoxysilan enthält.

7. Zusammensetzung nach Anspruch 6, wobei die Zusammensetzung hergestellt wird durch die Schritte:
Zusammengeben des aminofunktionellen Alkoxysilans, des organofunktionellen Alkoxysilans, des Wassers und eines Alkohols, und
Erwärmen der Mischung auf eine Temperatur von 60°C bis 85°C für 40 Minuten bis 80 Minuten, um ein partiell umgesetztes organofunktionelles Alkoxysilan bereitzustellen.

8. Zusammensetzung nach Anspruch 1, wobei die Reaktanten ein molares Verhältnis von Wasser zu Alkoxygruppen von 0,9 bis 1,1 aufweisen.

9. Zusammensetzung nach Anspruch 1, wobei die Zusammensetzung 5 Gew.-% bis 25 Gew.-% des partiell umgesetzten organofunktionellen Alkoxysilans enthält, wobei die Gewichtsprozentangaben sich auf das Gesamtgewicht der Zusammensetzung beziehen.

10. Verfahren zur Herstellung einer partiell umgesetzten organofunktionellen Alkoxysilanzusammensetzung, umfassend:
Zusammengeben
eines aminfunktionellen Alkoxysilans,
eines organofunktionellen Alkoxysilans, wobei die Organogruppe mit
einer Thiolgruppe reaktive ist,
eines Alkohols und
Wasser, wobei das molare Verhältnis von Wasser zu Alkoxygruppen von 0,9 bis 1,1 reicht,
und
Erwärmen der Mischung auf eine Temperatur von 60°C bis 85°C für 40 Minuten bis 80 Minuten, um eine Zusammensetzung bereitzustellen, die ein teilweise umgesetztes organofunktionelles Alkoxysilan enthält.

11. Verfahren zur Herstellung einer partiell umgesetzten epoxyfunktionellen Alkoxysilanzusammensetzung umfassend Umsetzen von:
einem aminofunktionellen Alkoxysilan,
einem epoxyfunktionellen Alkoxysilan,
einem Alkohol und
Wasser.

12. Mehrschichtige Beschichtung umfassend:
eine erste Beschichtung, enthaltend die Zusammensetzung nach Anspruch 1, und
eine zweite Beschichtung auf der ersten Beschichtung, wobei die zweite Beschichtung aus einer Zusammensetzung hergestellt ist, die reaktive Thiolgruppen und reaktive Alkenylgruppen enthält.

13. Mehrschichtige Beschichtung nach Anspruch 12, wobei die zweite Beschichtung ein thiolterminiertes Polythioetherprepolymer und ein Polyalkylenhärtungsmittel, ausgewählt aus einer Polyallylverbindung, einem Polyvinylether und einer Kombination davon, enthält, wobei das Polyalkenylhärtungsmittel durch eine mittlere Funktionalität von 2 bis 3 gekennzeichnet ist.

14. Verfahren zur Abdichtung einer Oberfläche, umfassend:
Bereitstellen einer Oberfläche,
Aufbringen der Zusammensetzung nach Anspruch 1 auf die Oberfläche, Trocknen der Zusammensetzung, um eine getrocknete Grundierbeschichtung bereitzustellen,
Aufbringen einer nicht gehärteten Dichtmittelzusammensetzung auf die getrocknete Grundierbeschichtung, wobei die nicht gehärtete Dichtmittelzusammensetzung reaktive Thiolgruppen und reaktive Alkenylgruppen enthält, und
Härten der nicht gehärteten Dichtmittelzusammensetzung, um eine abgedichtete Oberfläche bereitzustellen.

15. Verfahren nach Anspruch 14, wobei
Trocknen das Trocknenlassen der Zusammensetzung nach Anspruch 1 bei Raumtemperatur für 10 Minuten bis 60 Minuten umfasst und
Härten Belichten der nicht gehärteten Dichtmittelzusammensetzung mit UV-Strahlung umfasst.

## Revendications

1. Composition comprenant :
- des alcoxysilanes à groupe(s) fonctionnel(s) organique(s) ayant réagi partiellement, qui comportent les produits de réaction de partenaires réactionnels comprenant :
(i) un alcoxysilane à groupe fonctionnel amino,
(ii) un alcoxysilane à groupe fonctionnel organique, le groupe organique étant apte à réagir avec un groupe sulfhydryle,
(iii) et de l'eau,
- et un alcool.

2. Composition conforme à la revendication 1, dans laquelle l'alcoxysilane à groupe fonctionnel organique est choisi dans l'ensemble formé par
(a) un alcoxysilane à groupe fonctionnel époxyde, un alcoxysilane à groupe fonctionnel alcényle, un alcoxysilane à groupe fonctionnel acrylate, un alcoxysilane à groupe fonctionnel méthacrylate et une combinaison de n'importe lesquels des composés précédemment cités, l'alcoxysilane à groupe fonctionnel organique étant choisi, de préférence, parmi un alcoxysilane à groupe fonctionnel alcényle et un silane à groupe fonctionnel époxyde, et le silane à groupe fonctionnel époxyde étant choisi, en particulier, parmi du β-(3,4-époxy-cyclohexyl)-éthyl-triméthoxysilane et du γ-glycidyloxy-propyl-triméthoxysilane,
(b) et un mono(alcoxysilane) à groupe fonctionnel organique, un bis(alcoxysilane) à groupe fonctionnel organique, un tris(alcoxysilane) à groupe fonctionnel organique et une combinaison de n'importe lesquels des composés précédemment cités.

3. Composition conforme à la revendication 1, dans laquelle l'alcoxysilane à groupe fonctionnel amino est choisi parmi un mono(alcoxysilane) à groupe fonctionnel amino, un bis(alcoxysilane) à groupe fonctionnel amino et une combinaison de tels composés, et de préférence l'alcoxysilane à groupe fonctionnel amino comprend un bis(alcoxysilane) à groupe fonctionnel amino.

4. Composition conforme à la revendication 1, dans laquelle l'alcoxysilane à groupe fonctionnel amino est choisi parmi un mono(alcoxysilane) à groupe fonctionnel amino présentant la structure de formule (1), un di(alcoxysilane) à groupe fonctionnel amino présentant la structure de formule (2) et une combinaison de tels composés :
(NH₂-R⁵-)ₙSi(-O-R⁴)₄₋ₙ (1)
(R⁴-O-)₃-Si-(CH₂)ₙ-NH-(CH₂)ₙ-Si-(-O-R⁴)₃ (2)
dans lesquelles formules
- l'indice n vaut 1, 2 ou 3,
- chaque R⁵ représente une entité choisie, indépendamment, parmi les groupes alcanediyle en C₁₋₆ et une liaison,
- et chaque R⁴ représente un groupe choisi, indépendamment, parmi les groupes alkyle en C₁₋₃.

5. Composition conforme à la revendication 1, dans laquelle l'alcoxysilane à groupe fonctionnel organique comprend un mono(alcoxysilane) à groupe fonctionnel organique présentant la structure de formule (3) :
(R⁶-R⁵-)ₙSi(-O-R⁴)₄₋ₙ (3)
dans laquelle
- l'indice n vaut 1, 2 ou 3,
- chaque R⁶ représente un groupe choisi, indépendamment, parmi les groupes de formules -CH=CH₂, -O-C(=O)-CH=CH₂ et -O-C(=O)-C(-CH₃)=CH₂,
- chaque R⁵ représente une entité choisie, indépendamment, parmi les groupes alcanediyle en C₁₋₆ et une liaison,
- et chaque R⁴ représente un groupe choisi, indépendamment, parmi les groupes alkyle en C₁₋₃.

6. Composition conforme à la revendication 1, dans laquelle l'alcoxysilane à groupe fonctionnel organique comprend un alcoxysilane à groupe fonctionnel méthacrylate, et cet alcoxysilane à groupe fonctionnel méthacrylate comprend, de préférence, du γ-méthacryloxy-propyl-triméthoxysilane.

7. Composition conforme à la revendication 6, que l'on prépare au moyen des étapes consistant à :
- combiner l'alcoxysilane à groupe fonctionnel amino, l'alcoxysilane à groupe fonctionnel organique, de l'eau et un alcool,
- et chauffer le mélange ainsi obtenu à une température de 60 °C à 85 °C pendant une durée de 40 à 80 minutes, de manière à obtenir l'alcoxysilane à groupe fonctionnel organique ayant réagi partiellement.

8. Composition conforme à la revendication 1, dans laquelle les partenaires réactionnels présentent un rapport molaire de l'eau aux groupes alcoxy valant de 0,9 à 1,1.

9. Composition conforme à la revendication 1, dans laquelle les alcoxysilanes à groupe(s) fonctionnel(s) organique(s) ayant réagi partiellement se trouvent en une proportion de 5 % en poids à 25 % en poids, ces pourcentages étant rapportés au poids total de la composition.

10. Procédé de préparation d'une composition d'alcoxysilane à groupe fonctionnel organique ayant réagi partiellement, qui comporte les opérations suivantes :
- combiner
- un alcoxysilane à groupe fonctionnel amino,
- un alcoxysilane à groupe fonctionnel organique, le groupe organique étant apte à réagir avec un groupe sulfhydryle,
- un alcool,
- et de l'eau, le rapport molaire de l'eau aux groupes alcoxy valant de 0,9 à 1,1,
- et chauffer le mélange ainsi obtenu à une température de 60 °C à 85 °C pendant une durée de 40 à 80 minutes, de manière à produire une composition comprenant un alcoxysilane à groupe fonctionnel organique ayant réagi partiellement.

11. Procédé de préparation d'une composition d'alcoxysilane à groupe fonctionnel époxyde ayant réagi partiellement, qui comprend le fait de faire réagir :
- un alcoxysilane à groupe fonctionnel amino,
- un alcoxysilane à groupe fonctionnel époxyde,
- un alcool,
- et de l'eau.

12. Revêtement multicouche comportant :
- un premier revêtement comprenant une composition conforme à la revendication 1,
- et un deuxième revêtement qui recouvre le premier revêtement, ce deuxième revêtement ayant été préparé à partir d'une composition comportant des groupes sulfhydryle aptes à réagir et des groupes alcényle aptes à réagir.

13. Revêtement multicouche conforme à la revendication 12, dans lequel le deuxième revêtement comprend :
- un prépolymère du type polythioéther à terminaison(s) sulfhydryle,
- et un agent de durcissement du type polyalcényle choisi parmi un composé polyallylique, un poly(éther de vinyle) et une combinaison de tels composés, l'agent de durcissement du type polyalcényle étant **caractérisé par** une fonctionnalité moyenne de 2 à 3.

14. Procédé d'étanchéification d'une surface comportant les opérations suivantes :
- prendre une surface,
- appliquer une composition conforme à la revendication 1 sur cette surface,
- faire sécher la composition de manière à obtenir un revêtement primaire sec,
- appliquer une composition d'étanchéité non durcie par-dessus le revêtement primaire sec, cette composition d'étanchéité non durcie comportant des groupes sulfhydryle aptes à réagir et des groupes alcényle aptes à réagir,
- et faire durcir cette composition d'étanchéité non durcie, de manière à obtenir une surface étanche.

15. Procédé conforme à la revendication 14, dans lequel
- l'opération de séchage comprend le fait de laisser la composition conforme à la revendication 1 sécher à la température ordinaire pendant une durée de 10 à 60 minutes,
- et l'opération de durcissement comprend le fait d'exposer la composition d'étanchéité non durcie à un rayonnement UV.
